# EUROPÄISCHE PATENTSCHRIFT

(11) **EP 1 257 772 B1**
(45) Veröffentlichungstag und Bekanntmachung des Hinweises auf die Patenterteilung: **10.10.2018**
(21) Anmeldenummer: 01912033.6
(22) Anmeldetag: 23.02.2001
(51) Int. Cl.: F26B 5/06, F26B 3/08

(54) **VERFAHREN ZUR HERSTELLUNG EINES TEILCHENFÖRMIGEN GUTES**
METHOD FOR PRODUCING PARTICULATE GOODS
PROCÉDÉ DE PRODUCTION D'UN PRODUIT SOUS FORME DE PARTICULES

(30) Priorität: 25.02.2000 CH 371002000
(43) Veröffentlichungstag der Anmeldung: 20.11.2002
(73) Patentinhaber: GLATT GMBH, 79589 Binzen (DE)
(72) Erfinder: LEUENBERGER, Hans, CH-4148 Pfeffingen (CH); PRASCH, Armin, K., T., 79100 Freiburg (DE); LUY, Bernhard, 79102 Freiburg (DE)
(74) Vertreter: Braun, André jr.
(86) Internationale Anmeldenummer: PCT/IB2001/000255
(87) Internationale Veröffentlichungsnummer: WO 2001/063191

(56) Entgegenhaltungen:
- EP-A- 0 749 769
- EP-A- 0 781 587
- CH-A- 384 471
- CH-A- 408 781
- CH-A- 646 729
- CH-A- 681 564
- CH-A- 686 343
- DE-C- 3 916 479
- GB-A- 1 230 133
- GB-A- 2 116 872
- US-A- 3 300 868
- US-A- 3 313 032

## Beschreibung

### Technisches Gebiet

Die Erfindung betrifft ein Verfahren zur Herstellung eines teilchenförmigen Gutes aus einem mindestens teilweise flüssigen, ein Lösungs- und/oder Dispersionsmittel enthaltenden Material. Das mindestens teilweise flüssige Material weist zum Beispiel eine Lösung und/oder eine Dispersion mit einem flüssigen Dispersionsmittel, d.h. eine Suspension und/oder Emulsion, auf. Das Lösungs- und/ oder flüssige Dispersionsmittel besteht vorzugsweise im Wesentlichen aus Wasser, kann jedoch eventuell auch noch eine organische Komponente enthalten oder mindestens zum Teil aus einem organischen Lösungsmittel, beispielsweise tertiärem Butanol, bestehen.

Das Verfahren ist insbesondere zur chargenweisen Herstellung eines teilchenförmigen Gutes aus einem mindestens teilweise flüssigen Anfangs-Material vorgesehen, das vorzugsweise mindestens eine hitzeempfindliche Komponente enthält.

Es sei hier daran erinnert, dass die Gefriertemperatur einer Lösung normalerweise von der Konzentration der Komponenten der Lösung abhängt und durch ein Schmelzdiagramm dargestellt werden kann. Beim langsamen Abkühlen einer Lösung wird - abhängig von der anfänglichen Zusammensetzung - häufig zuerst nur eine der Komponenten gefroren und verfestigt, so dass eine Entmischung stattfinden kann. Wässerige Lösungen von Wirkstoffen und Hilfsstoffen für Arzneimittel haben häufig eine eutektische Temperatur. Beim Abkühlen einer Lösung auf oder unter die eutektische Temperatur werden dann das Lösungsmittel und ein gelöster Stoff oder eventuell mehrere gelöste Stoffe gleichzeitig gefroren und verfestigt, so dass ein Eutektikum entsteht.

### Stand der Technik

Aus der CH 664 005 A und der entsprechenden US 4 608 764 A sind verschiedene Verfahren für die chargenweise Herstellung von teilchenförmigen Gütern bekannt. Dabei wurde unter anderem vorgesehen, eine Lösung und/oder Suspension in einem Behälter zu einem Block zu gefrieren und diesen mechanisch zu zerkleinern. Die dabei entstehenden Teilchen wurden danach im gleichen Behälter, in dem der Gefriervorgang durchgeführt wurde, mit beispielsweise aus Luft bestehendem Prozessgas verwirbelt und mindestens zum grössten Teil durch Gefriertrocknen getrocknet.

Dieses Verfahren hat verschiedene Nachteile. Zunächst besteht beim Gefrieren eines Blocks eine grosse Entmischungsgefahr. Ferner ist die mechanische Zerkleinerung eines durch Gefrieren einer Lösung und/oder Suspension gebildeten Blocks kompliziert sowie aufwändig und führt leicht zu einer Verunreinigung des Gutes. Ferner haben Versuche gezeigt, dass die Gefriertrocknung durch Verwirbeln noch ziemlich viel Zeit benötigt.

Ein weiterer Nachteil des bekannten Verfahrens hängt damit zusammen, dass bei der Entwicklung eines neuen Produkts üblicherweise zuerst zu Versuchszwecken nur relativ kleine Mengen und später für die kommerzielle Verwertung des Produkts nach Bedarf grössere Mengen des Produkts hergestellt werden. Für die Entwicklung und für die kommerzielle Herstellung eines Produkts werden daher meistens verschieden grosse Einrichtungen benötigt, die hohe Beschaffungskosten verursachen. Wenn ein Gut zuerst in einer kleinen und danach in einer grösseren Einrichtung hergestellt wird, müssen für diesen oft als "scale up" bezeichneten Einrichtungswechsel zudem durch Versuche neue, optimale Verfahrensparameter ermittelt werden. Diese zusätzlichen Versuche sind zeitraubend und verteuern die Herstellungskosten.

Aus der US 3 313 032 A sind Verfahren und Einrichtungen zum Gefriertrocknen von ursprünglich flüssigen Materialien bekannt. Bei diesen Verfahren werden flüssiges Material in einem Behälter zersprüht und die dabei entstehenden Tröpfchen zu Teilchen gefroren. Diese werden danach in einer Trocknungskammer, die durch einen Bereich desselben Behälters gebildet oder in einem andern Behälter angeordnet ist, durch Gefriertrocknen getrocknet. Zum Verwirbeln und Gefriertrocknen der Teilchen wird Prozessgas von unten nach oben durch einen Bereich des Behälters geleitet. Das Prozessgas wird dabei durch einen Siebboden in die Trocknungskammer hinein und durch ein auf einer Seite des Mantels des Behälters angeordnetes Filter hindurch aus dem Behälter herausgesaugt.

Versuche mit andern Wirbelschichttrocknern haben jedoch gezeigt, dass die Gefriertrocknung in einer Wirbelschicht viel Zeit erfordert. Bei den aus der US 3 313 032 bekannten Einrichtungen sind die zum Gefriertrocknen dienenden Behälter zudem offenbar vom Siebboden bis zum Filter zylindrisch und das Filter im Vergleich zur Querschnittsfläche der Trocknungskammer nur klein. Die Gefriertrocknung kann daher nur mit kleinen Prozessgas-Durchflussraten durchgeführt werden, wodurch die Trocknungszeit noch zusätzlich erhöht wird.

Ein Verfahren gemäß dem Oberbegriff des Anspruchs 1 ist z.B. aus der CH-A5-686 343 bekannt.

Ein weiteres Verfahren zum Trocknen eines teilchenförmigen Gutes ist in der CH-A5-681 564 offenbart.

### Abriss der Erfindung

Der Erfindung liegt die Aufgabe zugrunde, Nachteile der bekannten Verfahren und Einrichtungen zu vermeiden. Dabei soll ein Verfahren geschaffen werden, das ermöglicht, aus einem zum Beispiel durch eine Lösung und/oder Suspension und/oder Emulsion gebildeten, mindestens teilweise flüssigen Material schnell, einfach und möglichst ohne Entmischung feste Teilchen zu bilden und diese danach schnell sowie wirtschaftlich mindestens zu einem grossen Teil durch Gefriertrocknen, d.h. Sublimation, zu trocknen. Ferner soll vorzugsweise ein und dieselbe Einrichtung wahlweise für die Herstellung kleiner und relativ grosser Mengen eines teilchenförmigen Gutes verwendbar sein.

Diese Aufgabe wird erfindungsgemäss gelöst durch ein Verfahren gemäß dem Anspruch 1.

Vorteilhafte Weiterbildungen des Verfahrens gehen aus den abhängigen Ansprüchen hervor.

Gemäss der Erfindung wird also mindestens ein wesentlicher Teil, nämlich vorzugsweise mindestens der grösste Teil der Teilchen mindestens während eines wesentlichen Teils der Gefriertrocknung in einem Prozessraum zum Anliegen an einem Filter gebracht, das oben im Prozessraum angeordnet ist und diesen nämlich am oberen Ende mindestens zum Teil begrenzt. Das Verfahren ermöglicht, das Prozessgas mit einer relativ grossen Durchflussrate und einer entsprechend hohen Geschwindigkeit durch den zum Gefriertrocknen dienenden Prozessraum hindurch zu leiten. Dadurch, dass die Teilchen am Filter anliegen, kann ferner wahrscheinlich eine beim Trocknen der Teilchen entstehende und diese umschliessende, die Wärmeübertragung sowie den Stofftransport sonst hemmende Wasserdampfhülle durch den Kontakt mit dem Filter aufgebrochen werden. Die Wärmeübertragung zu den Teilchen und die Abgabe von Wasserdampf sind daher besser als bei im Prozessgas suspendierten Teilchen. Ferner erzeugt das bzw. jedes gasdurchlässige Filterelement des Filters ein Druckgefälle, das seinerseits einen hohen Gradienten des Wasserdampfdruckes erzeugt, der den Gefriertrocknungsprozess fördert. Aus all diesen Gründen ermöglicht das erfindungsgemässe Verfahren eine wesentliche Verkürzung der zum Gefriertrocknen einer gegebenen Menge von Teilchen erforderlichen Zeit.

Das mindestens teilweise flüssige Anfangs-Material und das fertige, teilchenförmige Gut können, wie schon erwähnt, beispielsweise mindestens eine hitzeempfindliche Komponente enthalten. Das mindestens teilweise flüssige Anfangs-Material und das fertige, teilchenförmige Gut enthalten zum Beispiel mindestens einen therapeutischen Arzneimittel-Wirkstoff und/oder Arzneimittel-Hilfsstoff zur Bildung eines Arzneimittels für die Behandlung von Menschen und/oder Tieren und/oder mindestens einen Stoff für diagnostische Zwecke. Der Wirkstoff und/oder Hilfstoff und/oder der Stoff für diagnostische Zwecke sind zum Beispiel hydrophil und wasserlöslich, können jedoch auch zusammen mit einem flüssigen Dispersionsmittel eine Dispersion, wie eine Suspension oder Emulsion, bilden.

Das mindestens teilweise flüssige Anfangs-Material und das fertige Gut können zum Beispiel als gelöste oder dispergierte Komponente(n) mindestens ein Protein und/oder Peptid, wie eine Aminosäuresequenz, Immunglobuline, Blutplasmaproteine (z. B. einen Gerinnungsfaktor), amorphes und/oder kristallines Insulin, Hirudin, Erythropoietine, Filgrastim, Lenograstim, Immunmodulatoren (z. B. Alpha-, Beta- und/ oder Gamma-Interferon und/oder Interleukin), Peptidhormone, etwa Leuprolin, Leuprolidacetat, Buserelinacetat, Goserelinacetat, Triptorelin, oder Immunsuppressiva, wie z.B. Cyclosporine, enthalten. Weitere mögliche Komponenten sind Nukleasen, Enzyme, Zytostatika, Vitamine, Impfstoffe, monoklonale und sonstige Antikörper, Corticosteroide (z. B. Triamcinolondiacetat), Steroidhormone (z. B. Testosterone), Tumorsuppressionsgene, Antibiotika (etwa Penicillin G, Erythromycinderivate), Neuroleptika (etwa Clozapin, Fluoxetin), Anästhetika (z. B. Methadon, Morphin), Cox-2 Hemmer, Herz-Kreislaufmittel, liposomale Formulierungen, Mikroorganismen und/oder Zellen (z. B. menschliche oder tierische Hautzellen oder Stammzellen). Falls das Anfangs-Material Mikroorganismen oder (andere) Zellen für die Behandlung von Menschen und/oder Tieren enthält, können diese zum Beispiel in einem aus einem Nährmittel bestehenden Dispersionsmittel dispergiert sein.

Die Lösung oder das sonstige mindestens teilweise flüssige Anfangs-Material und das fertige, teilchenförmige Gut können ferner zusätzlich zu einem Wirkstoff oder eventuell anstelle eines solchen mindestens einen hydrophilen Arzneimittel-Hilfsstoff, zum Beispiel Mannitol oder Cyclodextrin oder ein Polymer, wie Polyvinylpyrrolidon, enthalten.

Das Anfangs-Material und das fertige, teilchenförmige Gut können statt für human-medizinische oder veterinär-medizinische Zwecke eventuell auch zur Bildung von einem schnell löslichen Nahrungsmittel oder mindestens Nahrungsmittel-Zusatz oder für irgend eine andere Verwendung vorgesehen sein.

### Kurze Beschreibung der Zeichnungen

Der Erfindungsgegenstand wird anschliessend anhand eines in der Zeichnung dargestellten Ausführungsbeispiels näher beschrieben. In der Zeichnung zeigt
Fig. 1 eine schematische Darstellung einer Einrichtung mit drei im Vertikalschnitt gezeichneten Wirbelschicht-Behältern zum Herstellen und Trocknen von Teilchen,
Fig. 2 ein Schema von einer der Kühl- und Trocknungsvorrichtungen der Einrichtung und
Fig. 3 einen Vertikalschnittt durch einen Teil einer Variante des ersten Wirbelschicht-Behälters.

### Beschreibung der bevorzugten Ausführungsbeispiele

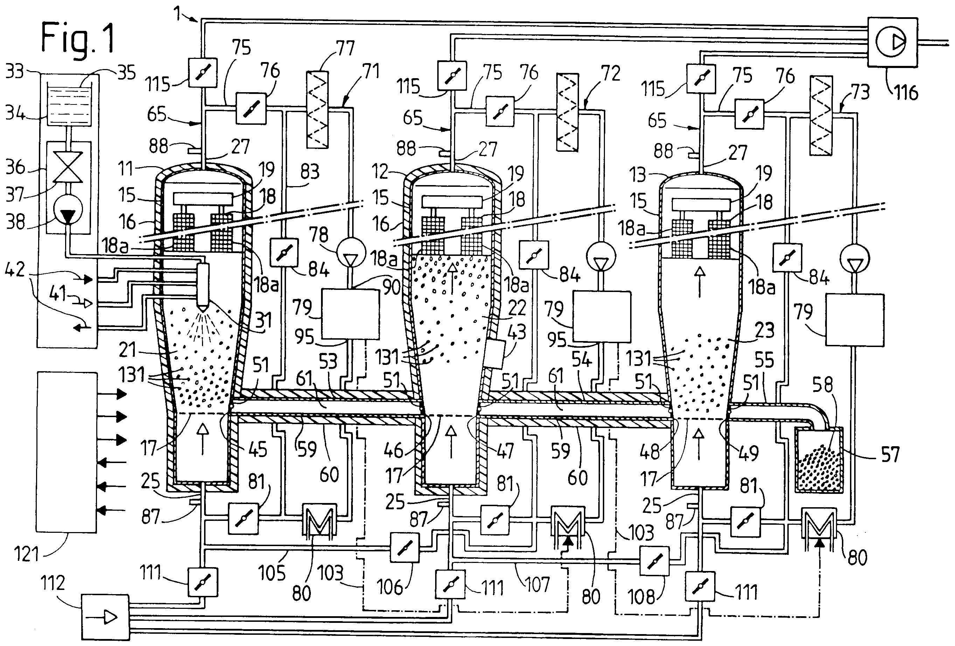

Die in der Fig. 1 ersichtliche, als Ganzes mit 1 bezeichnete Wirbelschicht-Einrichtung besitzt mehrere, nämlich drei separate, in kleinem Abstand nebeneinander angeordnete und lösbar an einem nicht gezeichneten Gestell befestigte, nur vereinfacht gezeichnete Wirbelschicht-Behälter 11, 12, 13. Diese werden im Folgenden in der Reihenfolge der Bezugszeichen als erster bzw. zweiter bzw. dritter und letzter Wirbelschicht-Behälter bezeichnet. Jeder Behälter 11, 12, 13 hat eine nur vereinfacht gezeichnete Wand 15 mit mehreren Wandteilen, die mit Flanschen und dergleichen versehen sowie lösbar und dicht miteinander verbunden sind. Die Wände 15 bestehen im Wesentlichen aus metallischen Materialien, zum Beispiel rostfreiem Stahl, können aber beispielsweise noch mindestens je ein Glasfenster aufweisen. Die Wände des ersten Behälters 11 sowie des zweiten Behälters 12 sind aussen mit einer sie mindestens annähernd allseitig und vollständig bedeckenden Wärmeisolation 16 versehen. Die Wand des dritten Behälters 13 hat gemäss der Fig. 1 keine Wärmeisolation, könnte aber eventuell auch noch mit einer solchen umschlossen werden. Jeder Wirbelschicht-Behälter 11, 12, 13 hat eine vertikale Achse und ist im Allgemeinen - d.h. abgesehen von mindestens einem durchsichtigen Fenster, Befestigungsmitteln, Anschluss-Stutzen und dergleichen - rotationssymmetrisch zu dieser Achse. Die drei Wirbelschicht-Behälter haben zum Beispiel - abgesehen von der beim dritten Behälter fehlenden Wärmeisolation und abgesehen von den beispielsweise verschiedenen Grössen im Allgemeinen ähnliche Wandteile. Die Wand 15 besitzt einen Mantel, der zum Beispiel bei jedem Behälter unten und oben je einen zylindrischen Mantelabschnitt und dazwischen einen sich nach oben konisch erweiternden Mantelabschnitt hat.

In jedem Behälter ist ungefähr beim unteren Ende des konischen Mantelabschnitts ein gasdurchlässiger Sieb-Boden 17 mit Löchern oder Schlitzen angeordnet und lösbar an der Wand 15 befestigt. Der obere, zylindrische Mantelabschnitt enthält ein nur vereinfacht gezeichnetes Filter 18. Dieses besitzt vorzugsweise - insbesondere beim zweiten Behälter 12 - mindestens zwei nebeneinander angeordnete Filterelemente 18a, die separat gereinigt und von an ihnen anhaftenden Teilchen befreit werden können. Jedes Filterelement 18a besitzt zum Beispiel mindestens einen rüttelbar im Behälter angeordneten Halter und ein von diesem gehaltenes, gasdurchlässiges, flexibles Filtertuch mit mindestes einem Filterstrumpf und vorzugsweise mehreren solchen. Die Filterstrümpfe können zum Beispiel von einem ungefähr horizontalen, unten am Filter angeordneten Halterteil weg ungefähr vertikal nach oben ragen. Ferner ist zum Beispiel noch eine ebenfalls nur vereinfacht gezeichnete Filter-Reinigungsvorrichtung 19 vorhanden. Diese kann zum Beispiel mindestens eine Rüttelvorrichtung und/oder Ultraschallquelle aufweisen, um den bzw. jeden Halter und das von diesem gehaltene Filtertuch separat zu rütteln und/oder mit Ultraschall zu beaufschlagen.

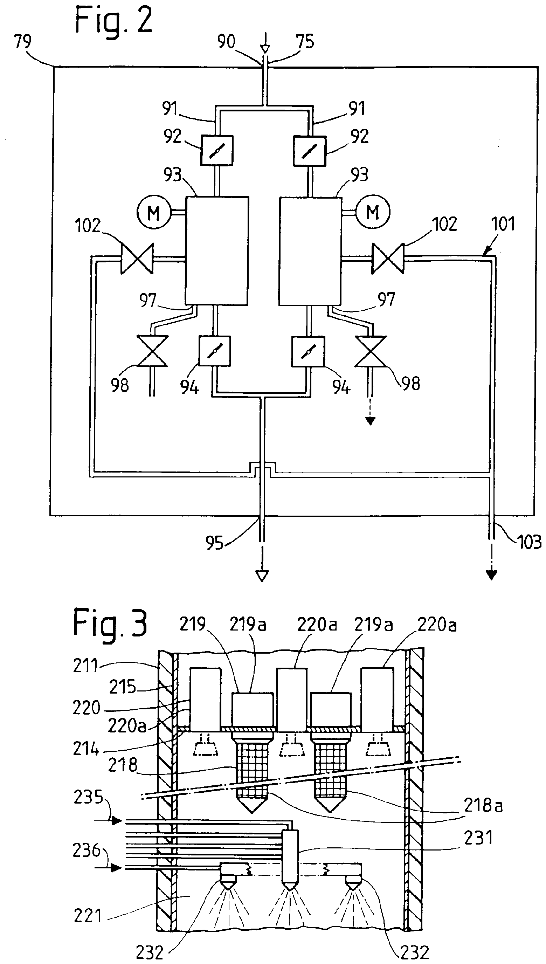

Jedes Filterelement 18a kann jedoch statt mindestens eines flexiblen Filtertuchs mindestens eine starr im Behälter befestigte, im wesentlichen formfeste Filterpatrone besitzen. Jede Filterpatrone kann von einem inneren, zum Beispiel horizontalen Wandungsteil weg ungefähr vertikal nach unten ragen, wie es in der noch näher beschriebenen Figur 3 für eine Variante der Einrichtung dargestellt ist. Jede Filterpatrone besitzt eine Wand, die mindestens zum grössten Teil durch ein metallisches, gasdurchlässiges Filtrationselement mit einem vorzugsweise mehrlagigen Drahtgewebe gebildet ist. Dieses kann eventuell aussen noch einem selbstverständlich gasdurchlässigen Überzug oder Mantel aus einem Kunststoff, zum Beispiel einem fluorhaltigen Kunststoff wie Polytetrafluoräthylen, oder aus einem textilen Gewebe aufweisen. Die Filter-Reinigungsvorrichtung kann in diesem Fall Mittel zum Ausblasen der bzw. jeder Filterpatrone mit einem Reinigungsgas aufweisen.

Die vertikalen Abmessungen der Filter 18 sind ungefähr gleich den Längen der Strümpfe oder Patronen der Filter oder geringfügig grösser als die Längen der Strümpfe oder Patronen der Filter. Die vertikale Filter-Abmessung und die Länge der Strümpfe oder Patronen des im zweiten Behälter 12 angeordneten Filters 18 sind vorzugsweise grösser als die vertikalen Filter-Abmessungen und Längen der Strümpfe oder Patronen der im ersten Behälter 11 und im dritten Behälter 13 angeordneten Filter 18. Die vertikale Filter-Abmessung und die Länge der Strümpfe oder Patronen des im zweiten Behälter 12 angeordneten Filters 18 betragen - abhängig von der Grösse der Einrichtung - zweckmässigerweise mindestens 1 m, vorzugsweise mindesten 1,5 m und zum Beispiel 2 m bis ungefähr 3 m. Die gasdurchlässige Filterfläche des im zweiten Behälter 12 angeordneten Filter 18 ist vorzugsweise ebenfalls grösser als die gasdurchlässige Filterfläche der in den beiden andern Behältern 11 und 13 angeordneten Filter 18. Die gasdurchlässige Filterfläche der Filter 18 und insbesondere des im zweiten Behälter 12 angeordneten Filters 18 ist auch grösser als die horizontale Querschnittsfläche des das betreffende Filter 18 enthaltenden Behälter-Innenraumbereichs beim unteren Ende des Filters 18. Die gasdurchlässige Filterfläche des im zweiten Behälter angeorndeten Filters ist dabei zweckmässigerweise mindestens 3-mal, vorzugsweise mindestens 5-mal und zum Beispiel bis 15-mal oder sogar bis 30-mal grösser als die genannte Querschnittsfläche.

Jeder Wirbelschicht-Behälter 11, 12, 13 begrenzt einen gasdicht gegen die Umgebung abgeschlossenen Innenraum, der durch den Sieb-Boden 17 und das Filter 18 in drei Bereiche unterteilt ist. Der am unteren Ende durch den Sieb-Boden 17 und am oberen Ende mindestens zu einem grossen Teil durch das Filter 18 begrenzte Bereich des Innenraums des ersten, zweiten und dritten Behälters bildet einen ersten Prozessraum 21 bzw. einen zweiten Prozessraum 22 bzw. einen dritten und letzten Prozessraum 23. Jeder Behälter ist unterhalb des Sieb-Bodens 17 mit einem Gas-Einlass 25 und oberhalb des Filters 18 mit einem Gas-Auslass 27 versehen.

Der konische Abschnitt des zweiten Behälters 12 erweitert sich nach oben zum Beispiel nur relativ wenig und eventuell weniger als die konischen Abschnitte der beiden andern Behälter 11, 13. Der Durchmesser des zweiten Prozessraums 22 ist beim unteren Ende des Filters 18 vorzugsweise höchstens 70% und zum Beispiel höchstens ungefähr 50% grosser als beim gasdurchlässigen Sieb-Boden 17. Da das im zweiten Behälter 12 angeordnete Filter 18 vorzugsweise grösser ist als die im ersten und dritten Behälter angeordneten Filter 18, ist der Innenraum des zweiten Behälter zum Beispiel grösser und insbesondere höher als die Innenräume der beiden andern Behälter. Die drei Behälter und ihre Innenräume können jedoch eventuell - abgesehen von der beim dritten Behälter fehlenden Wärmeisolation - ungefähr gleich ausgebildet sein und ungefähr gleiche Formen und Abmessungen haben.

Eine Sprühvorrichtung weist mindestens eine im ersten Wirbelschicht-Behälter 11 angeordnete Sprühdüse 31 auf. Diese hat ein Düsengehäuse und mindestens eine, im ersten Prozessraum 21 angeordnete, nach unten gerichtete Austrittsöffnung. Die Sprühdüse 31 ist zum Beispiel als Zweistoffdüse ausgebildet und noch mit einer Heizvorrichtung versehen. Die Heizvorrichtung besitzt zum Beispiel mindestens einen im und/oder am Düsengehäuse angeordneten Heizfluid-Durchgang. Die Sprühvorrichtung weist ferner eine ausserhalb des ersten Behälters 11 angeordnete Zufuhrvorrichtung 33 auf. Die Zufuhrvorrichtung 33 weist ein Reservoir 34 für ein aus einer Lösung und/oder Dispersion bestehendes, mindestens teilweise flüssiges Anfangs-Material 35 auf. Das Reservoir 34 ist über Sperr- und Dosiermittel 36 sowie eine Leitung mit der Sprühdüse 31 verbunden. Die Sperr- und Dosiermittel 36 weisen zum Beispiel ein Ventil 37 und eventuell eine Pumpe 38 auf. Die Zufuhrvorrichtung 33 besitzt ferner nicht näher dargestellte Mittel, um der Sprühdüse durch einen Pfeil dargestelltes Sprühgas 41, z.B. Luft oder Stickstoff zuzuführen und um ein durch Pfeile dargestelltes, zum Beispiel aus Wasser bestehendes Heizfluid 42 durch den bzw. jeden Heizfluid-Durchgang der Sprühdüse hindurch zu leiten. Es sei angemerkt, dass die Sprühdüse zum Beispiel auch als Ultraschalldüse ausgebildet sein könnte und/oder anstelle mindestens eines Heizfluid-Durchgangs mindestens ein elektrisch beheizbares Widerstandelement und die Zufuhrvorrichtung 35 Stromversorgungsmittel zum Zuführen von elektrischem Strom zur Sprühdüse aufweisen könnte.

Eventuell kann mindestens einer der Wirbelschicht-Behälter, nämlich der zweite Behälter 12, mit einer Wärme-Energiequelle 43 versehen sein, um Wärme-Energie in Form elektromagnetischer Strahlen und/oder Wellen, also ohne Wärmeleitung und Konvektion, in den Prozessraum dieses Behälters und zum Filter 18 zu strahlen. Die Wärme-Energiequelle 43 kann zum Beispiel als Infrarotlichtstrahler oder als Mikrowellenquelle ausgebildet sein und im letzteren Fall Mikrowellen mit einer Frequenz von beispielsweise ungefähr 2,45 GHz erzeugen. Ferner kann stattdessen oder zusätzlich eine Wärme-Energiequelle zum Beheizen der Filterelemente des Filters vorgesehen werden.

Der erste Behälter 11 besitzt einen Teilchen-Auslass 45. Der zweite Behälter 12 hat einen Teilchen-Einlass 46 sowie einen Teilchen-Auslass 47. Der dritte Behälter 13 hat einen Teilchen-Einlass 48 und einen Teilchen-Auslass 49. Die Durchgänge bzw. Öffnungen der Teilchen-Einlässe und der Teilchen-Auslässe aller drei Behälter 11, 12, 13 münden unmittelbar über den Sieb-Böden 17 oder in höchstens sehr kleinem Abstand von diesen in den Prozessraum des betreffenden Behälters. Jeder Teilchen-Einlass und Teilchen-Auslass der Behälter 11, 12, 13 ist mit einer Absperrvorrichtung 51 versehen, die ein verstellbares Absperrelement, beispielsweise eine verschwenkbare Klappe, aufweist. Die Absperrelemente können wahlweise in eine Schliess- und eine Freigabe-Stellung gebracht werden, in der sie die Öffnung des betreffenden Teilchen-Einlasses bzw. -Auslasses für die Teilchen abschliessen bzw. freigeben, wobei die Absperrelemente in der Schliess-Stellung die Öffnungen auch mindestens einigermassen und vorzugsweise vollkommen gasdicht abschliessen. Die Absperrelemente sind derart angeordnet, dass sie die Öffnungen in ihren Schliess-Stellungen mehr oder weniger bündig mit den Innenflächen der Wände 15 der Behälter abschliessen.

Der Teilchen-Auslass 45 des ersten Behälters 11 ist durch eine Transfer-Verbindung 53 mit dem Teilchen-Einlass 46 des zweiten Behälters 12 verbunden. Der Teilchen-Auslass 47 des zweiten Behälters 12 ist durch eine Transfer-Verbindung 54 mit dem Teilchen-Einlass 48 des dritten Behälters verbunden. Der Teilchen-Auslass 49 des dritten Behälters 13 ist durch eine Leitung 55 mit einem Sammelgebinde 57 zum Aufnehmen des hergestellten teilchenförmigen Gutes 58 verbunden. Die zwei Transfer-Verbindungen 53, 54, welche die drei Wirbelschicht-Behälter 11, 12, 13 paarweise miteinander verbinden, weisen zum Beispiel je ein kurzes, gerades, ungefähr horizontales, metallisches, etwa aus rostfreiem Stahl bestehendes Rohr 59 auf, das innen einen dicht gegen die Umgebung abgeschlossenen Transfer-Durchgang 61 für die Teilchen begrenzt und aussen mit einer Wärmeisolation 60 umhüllt ist. Jeder Transfer-Durchgang 61 ist durch die Absperrvorrichtungen 51 wahlweise absperrbar und freigebbar. Die Leitung 55 kann zum Beispiel aus einem abgewinkelten und/oder abgebogenen und/oder mindestens teilweise vom dritten Wirbelschicht-Behälter 13 weg nach unten geneigten, metallischen Rohr ohne Wärmeisolation bestehen und den letzten Prozessraum 23 zum Beispiel ebenfalls dicht gegen die Umgebung abgeschlossen mit dem Innenraum des Sammelgebindes 57 verbinden.

Die Einrichtung 1 weist ferner Gas-Leitmittel 65 auf, um Prozessgas, zum Beispiel Luft, beim normalen Betrieb von unten nach oben durch die drei Wirbelschicht-Behälter 11, 12, 13 hindurch zu leiten. Die Gas-Leitmittel 65 bilden dabei zusammen mit den drei Wirbelschicht-Behältern 11, 12, 13 einen je einem dieser Behälter zugeordneten, ersten Gas-Kreislauf 71, zweiten Gas-Kreislauf 72 und dritten Gas-Kreislauf 73. Jeder Gas-Kreislauf hat eine den Gas-Auslass 27 mit dem Gas-Einlass 25 des betreffenden Wirbelschicht-Behälters verbindende Leitung 75. Diese begrenzt einen Durchgang und enthält vom Gas-Auslass zum Gas-Einlass der Reihe nach ein Ventil 76, ein Absolutfilter 77, eine Pumpe 78, eine Kühl- und Trocknungsvorrichtung 79, eine Heizvorrichtung 80 mit einem Wärmetauscher und ein Ventil 81. Ein Bypass 83 verbindet den Eingang des Absolutfilters 77 mit dem Ausgang der Heizvorrichtung 80. Beim Gas-Einlass 25 und beim Gas-Auslass 27 jedes Behälters 11, 12, 13 ist in der Leitung 75 und/oder im betreffenden Behälter selbst ein Taupunkttemperatur-Sensor 87 bzw. 88 angeordnet. Ferner können die Wirbelschicht-Behälter und/oder Gas-Kreisläufe eventuell noch nicht gezeichnete Temperatur-Sensoren zum Messen der Gastemperaturen und/oder eventuell Durchflussmesser zum Messen der Gasdurchflussraten aufweisen. Im übrigen werden die zum ersten, zweiten und dritten Gas-Kreislauf gehörenden Vorrichtungen im Folgenden zum Teil ebenfalls mit den Wörtern "erste, zweite und dritte" bezeichnet.

Die erste Kühl- und Trocknungsvorrichtung 79 des ersten Gas-Kreislaufs ist separat in der Fig. 2 ersichtlich. Der von der Pumpe kommende Abschnitt der Leitung 75 des Gas-Kreislaufs ist beim Gas-Eingang 90 der Kühl- und Trocknungsvorrichtung 79 in zwei Zweigleitungen 91 aufgezweigt, von denen jede entlang dem Strömungsweg der Reihe nach ein Ventil 92, eine Kompressionskältemaschine 93 und ein Ventil 94 aufweist. Nach den Ausgängen der Ventile 94 sind die beiden Zweigleitungen 91 wieder zu einer einzigen Leitung vereinigt, die den Gas-Ausgang 95 der Kühl- und Trocknungsvorrichtung 79 bildet. Jede Kompressionskältemaschine 93 hat einen Kältemittelkreislauf mit einem durch einen Elektromotor antreibbaren Kompressor, einem Verdampfer und einem Kondensator. Der Verdampfer jeder Kältemaschine 93 bildet zusammen mit weiteren Bauteilen einen Wärmetauscher zum Kühlen des im Gas-Kreislauf 71 durch die Leitung 75 umgewälzten Gases. Jede Kältemaschine besitzt einen Abtau-Flüssigkeits-Auslass 97 mit einem Ventil 98. Ferner sind mindestens bei den Kühl- und Trocknungsvorrichtungen 79 des ersten und zweiten Gas-Kreislaufs 71 und 72 noch Wärmerückgewinnmittel 101 vorhanden, um von den Kondensatoren der Kältemaschinen abgegebene Wärme zurück zu gewinnen. Die Wärmerückgewinnmittel 101 weisen mit den Kondensatoren verbundene Leitungen mit je einem Ventil 102 auf. Die zweite und die dritte Kühl- und Trocknungsvorrichtung sind ähnlich wie die erste ausgebildet, wobei aber bei der dritten Kühl- und Trocknungsvorrichtung eventuell keine Wärmerückgewinnmittel vorhanden sind.

Die Wärmerückgewinnmittel sind mit mindestens einer von der Kühl- und Trocknungsvorrichtung 79 wegführenden Wärmetransferleitung 103 und beispielsweise auch noch mit einer nicht gezeichneten Rückleitung versehen und/oder verbunden, damit die Abwärme mit einem Fluid, beispielsweise einer Flüssigkeit, zu einer Verwendungsstelle transferiert werden kann. Die Wärmerückgewinnmittel 101 der zum ersten Gas-Kreislauf 71 gehörenden Kühl- und Trocknungsvorrichtung 79 sind zum Beispiel über die zugeordnete Wärmetransferleitung 103 mit dem Wärmetauscher der Heizvorrichtung 80 des zweiten Gas-Kreislaufs 72 verbunden. Die Wärmerückgewinnmittel 101 der Kühlvorrichtung 79 des zweiten Gas-Kreislaufs 72 sind zum Beispiel über die zugeordnete Wärmetransferleitung 103 mit dem Wärmetauscher der Heizvorrichtung 80 des dritten Gas-Kreislaufs 73 verbunden. Der Wärmetauscher der Heizvorrichtung 80 des ersten Gas-Kreislaufs ist zum Beispiel ebenfalls noch durch eine nicht gezeichnete Wärmetransferleitung mit der Kühl- und Trocknungsvorrichtung 79 von einem der Gas-Kreisläufe, beispielsweise vom ersten Gas-Kreislauf verbunden.

Der Gas-Einlass 25 des ersten Wirbelschicht-Behälters 11 ist zusätzlich über eine Leitung 105 mit einem Ventil 106 mit dem Ausgang der Heizvorrichtung 80 des zweiten Gas-Kreislaufs 72 verbunden. Der Gas-Einlass 25 des zweiten Wirbelschicht-Behälters 12 ist analog über eine Leitung 107 mit einem Ventil 108 mit dem Ausgang der Heizvorrichtung 80 des dritten Gas-Kreislaufs 73 verbunden.

Der Gas-Einlass 25 jedes Wirbelschicht-Behälters 11, 12, 13 ist über ein Ventil 111 mit einer Sterilisiermittel- und Gas-Zufuhrvorrichtung 112 verbunden. Der Gas-Auslass 27 jedes Behälters 11, 12, 13 ist über ein Ventil 115 mit einer Saug- und/oder Evakuiervorrichtung 116 verbunden, die mindestens eine Saugpumpe und zum Beispiel auch noch mindestens ein Filter sowie sonstige Elemente umfasst.

Die Pumpen zum Fördern von Gas weisen beispielsweise Flügelräder und Elektromotoren auf. Die in den gasführenden Leitungen vorhandenen Ventile und die Absperrvorrichtungen 51 haben beispielsweise schwenkbare Klappen und elektrische Stellvorrichtungen zum Verstellen von diesen. Das Ventil 37 der Zufuhrvorrichtung 33 zum Zuführen des mindestens teilweise flüssigen Materials 35 und die sonstigen Ventile sind beispielsweise ebenfalls elektrisch steuerbar. Die Einrichtung 1 weist noch eine Steuervorrichtung 121 auf. Diese besitzt zum Beispiel einen Prozessrechner und andere elektronische Elemente, optische Signalgeber, mindestens eine Anzeige- und Registriervorrichtung, manuell bedienbare Bedienungselemente und eventuell pneumatische Elemente. Ferner sind durch Pfeile angedeutete elektrische Leitungen und eventuell Druckluft-Leitungen vorhanden. Diese Leitungen verbinden die Steuervorrichtung 121 mit den elektrischen Motoren der verschiedenen Pumpen und der Kompressionskältemaschinen, den Stellvorrichtungen der Absperrvorrichtung 51, den Taupunkt-Temperatursensoren und allfälligen andern Sensoren sowie steuerbaren Bauteilen. Die Steuervorrichtung 121 ist derart ausgebildet, dass der Betrieb der Anlage wahlweise manuell oder automatisch gesteuert werden kann.

Im Folgenden wird der Betrieb der Wirbelschicht-Einrichtung 1 zum chargenweisen Herstellen und Trocknen eines teilchenförmigen Gutes erläutert.

Das im Reservoir 34 vorhandene mindestens teilweise flüssige Anfangs-Material 35 besteht aus einer Lösung und/oder eventuell einer Dispersion, d.h. einer Suspension und/oder Emulsion. Das Lösungs- und/oder flüssige Dispersionsmittel besteht dabei normalerweise mindestens im Wesentlichen aus Wasser. Das Anfangs-Material enthält mindestens eine gelöste und/oder dispergierte Komponente, beispielsweise mindestens eine der in der Einleitung genannten Komponenten, etwa einen wasserlöslichen therapeutischen Wirkstoff.

Die inneren Begrenzungsflächen der Wände der drei Prozessräume und beispielsweise auch der restlichen Innenraumbereiche der Wirbelschicht-Behälter 11, 12, 13, der Transfer-Verbindungen 53, 54, der Leitung 55 sowie der drei Gas-Kreisläufe 71, 72, 73 und die in den Behältern und Gas-Kreisläufen vorhandenen Teile können vor und/oder nach der Herstellung eines teilchenförmigen Gutes steril gemacht werden. Hierzu wird zum Beispiel aus der Sterilisiermittelzufuhrvorrichtung 112 über die Ventile 111 ein Sterilsiermittel in die Wirbelschicht-Behälter sowie Gas-Kreisläufe eingeleitet. Ferner wird nach Bedarf über zusätzliche, nicht gezeichnete Leitungen und Ventile noch an andern, sonst ungenügend zugänglichen Stellen der steril zu machenden Teile Sterilisiermittel eingeleitet. Das Sterilisiermittel besteht zum Beispiel aus überhitztem, gespanntem Wasserdampf mit einer Temperatur von mindestens oder ungefähr 120°C und einem Druck von mindestens oder ungefähr 200 Kilopascal. Das Sterilisiermittel könnte jedoch statt aus Wasserdampf eventuell aus trockener, heisser Luft mit einer Temperatur von mindestens etwa 160°C und zum Beispiel ungefähr 180°C oder aus flüssigem Alkohol oder Wasserstoffsuperoxid bestehen. Nach der Sterilisation der Wirbelschicht-Behälter und Gas-Kreisläufe wird das Sterilisiermittel zum Beispiel über die Ventile 115 durch die Saug- und/oder Evakuiervorrichtung 116 aus den Wirbelschicht-Behältern und Gas-Kreisläufen abgeleitet und durch ein Prozessgas ersetzt. Dieses besteht normalerweise aus Luft, die zum Beispiel in der Sterilisiermittel- und Gas-Zufuhrvorrichtung 112 filtriert sowie eventuell sterilisiert und über die Ventile 111 in die Wirbelschicht-Behälter und Gas-Kreisläufe eingeleitet wird.

Beim normalen Betrieb wird das aus Luft bestehende Prozessgas in den drei Wirbelschicht-Behältern 11, 12, 13 und den zusammen mit diesen die Gas-Kreisläufe 71, 72, 73 bildenden Leitungen 75 umgewälzt und von unten nach oben durch den Behälter 11, 12, 13 und insbesondere deren Prozessräume 21, 22, 23 geleitet. Die Luft wird dabei in den Ventil- und Trocknungsvorrichtungen 79 gekühlt und durch Ausfrieren des in der Luft enthaltenen Wasserdampfs getrocknet. Die gekühlte sowie getrocknete Luft strömt danach durch die Heizvorrichtungen 80 und wird in diesen wieder erwärmt, so dass sie beim Einströmen in die Wirbelschicht-Behälter eine sehr kleine relative Feuchtigkeit und die gewünschte Temperatur hat.

Im Folgenden wird angenommen, dass das mindestens teilweise flüssige Anfangs-Material 35 aus einer Lösung mit einer eutektischen Temperatur besteht, die mindestens -30°C sowie höchstens 0°C beträgt und zum Beispiel im Bereich von -25°C bis -5°C liegt. Die in den drei Gas-Kreisläufen umgewälzte Luft wird in den Kühl- und Trocknungsvorrichtungen 79 auf eine Temperatur abgekühlt, die zum Beispiel ungefähr -50°C bis ungefähr -80°C beträgt. Die im ersten Gas-Kreislauf 71 umgewälzte Luft wird nach der Abkühlung in der Kühl- und Trocknungsvorrichtung 79 in der Heizvorrichtung 80 wieder ein wenig erwärmt, so dass sie beim Einströmen in den ersten Wirbelschicht-Behälter 11 und im ersten Prozessraum eine Temperatur hat, die höchstens -30°C, vorzugsweise -80°C bis -40°C und zum Beispiel ungefähr -60°C beträgt. Die im zweiten Gas-Kreislauf 72 umgewälzte Luft wird in der zweiten Kühl- und Trocknungsvorrichtung 79 zum Beispiel ungefähr auf die gleiche Temperatur abgekühlt wie die im ersten Gas-Kreislauf umgewälzte Luft in der ersten Kühl- und Trocknungsvorrichtung. Die durch die zweite Kühl- und Trocknungsvorrichtung gekühlte und getrocknete Luft wird in der Heizvorrichtung 80 des zweiten Gas-Kreislaufs mehr erwärmt als die im ersten Gas-Kreislauf umgewälzte Luft, so dass die in den zweiten Wirbelschicht-Behälter 52 einströmende Luft eine Temperatur hat, die kleiner als die eutektische Temperatur ist, aber nur wenig unter dieser liegt. Die Temperatur der in den zweiten Behälter 12 eingeleiteten Luft kann beim Einströmen in den Behälter 12 nämlich zweckmässigerweise höchstens 20°C, vorzugsweise höchstens 10°C und zum Beispiel sogar nur höchstens oder ungefähr 5°C unter der eutektischen Temperatur liegen und zum Beispiel einen Wert zwischen -30°C und annähernd 0°C haben. Die Temperatur der als Prozessgas in den zweiten Behälter 12 geleiteten Luft ist zweckmässigerweise mindestens 10°C, vorzugsweise mindestens 20°C und zum Beispiel mindestens 30°C höher als die Temperatur der als Prozessgas in den ersten Behälter 11 geleiteten Luft. Die im dritten Gas-Kreislauf 73 umgewälzte Luft wird in der dritten Kühl- und Trocknungsvorrichtung 79 zum Beispiel ebenfalls ungefähr auf die gleiche Temperatur gekühlt wie in den Kühl- und Trocknungsvorrichtungen der Gas-Kreisläufe 72 und 73, aber danach in der Heizvorrichtung 80 auf eine Temperatur erwärmt, die grösser als die eutektische Temperatur sowie grösser als 0°C, vorzugsweise 10°C bis 30°C und zum Beispiel ungefähr gleich der normalen Raum- und Umgebungstemperatur, also zum Beispiel ungefähr 20°C ist.

Zur Herstellung von Teilchen führt die Zufuhrvorrichtung 33 der Sprühdüse 31 mindestens teilweise flüssiges Anfangs-Material 35 und Sprühgas 41 zu, das beispielsweise aus filtrierter und getrockneter Druckluft besteht. Die Temperatur des Sprühgases 41 soll oberhalb der eutektischen Temperatur liegen und kann zum Beispiel ungefähr gleich der normalen Raumtemperatur sein und also ungefähr 20°C betragen. Die Zufuhrvorrichtung 33 leitet ferner ein Heizfluid 42 durch die Sprühdüse 31, damit diese beim Zersprühen des Materials 35 nicht zufriert.

Der Druck des bei der Herstellung eines teilchenförmigen Gutes in den Gas-Kreisläufen umgewälzten und in den Wirbelschicht-Behältern, insbesondere in deren Prozessräumen 21, 22, 23 vorhandenen Prozessgases ist zum Beispiel ungefähr gleich dem Umgebungsluftdruck. Es sei jedoch erwähnt, dass es bei gewissen Arten von Gütern eventuell zweckmässig sein könnte, mindestens in einem der Prozessräume, insbesondere im zweiten Prozessraum 22 sowie eventuell auch im ersten Prozessraum 21 mindestens zeitweise einen Druck zu erzeugen, der unter dem normalen Umgebungsluftdruck liegt. Eventuell kann sogar im dritten Prozessraum 23 mindestens zeitweise ein Unterdruck erzeugt werden. Der Druck im ersten und/oder zweiten und gegebenenfalls dritten Prozessraum beträgt dann vorzugsweise mindestens 20 Hektopascal, vorzugsweise höchstens 900 Hektopascal oder sogar nur höchstens 500 Hektopascal und zum Beispiel etwa 50 bis 300 Hektopascal. Falls bei der Herstellung und Behandlung eines teilchenförmigen Gutes in mindestens einem der Wirbelschicht-Behälter ein Unterdruck vorhanden sein soll, kann vor der Herstellung von Teilchen mit der Saug- und/oder Evakuiervorrichtung 116 über das zugeordnete Ventil 116 vorübergehend Luft aus dem betreffenden Wirbelschicht-Behälter und Gas-Kreislauf abgesaugt werden.

Für die Herstellung einer Charge eines teilchenförmigen Gutes wird in einer Sprüh- und Gefrierphase mit der Sprühdüse 31 eine entsprechende Menge des mindestens teilweise flüssigen Anfangs-Materials 35 im ersten Prozessraum 21 zersprüht. Dabei werden Tröpfchen erzeugt, deren Durchmesser vorzugsweise kleiner als 100 µm und zum Beispiel ungefähr 10 µm bis 30 µm beträgt. Mit mindestens einer speziellen Sprühdüse und eventuell einer Zusatz-Vorrichtung können bei Bedarf auch kleinere Tröpfchendurchmesser im Bereich von 1 µm bis 10 µm oder sogar unterhalb von 1 µm erzeugt werden. Die Tröpfchen gelangen in Kontakt mit der durch den ersten Prozessraum von unten nach oben durchströmenden, kalten, zum Beispiel eine Temperatur von ungefähr -60°C aufweisenden Luft. Diese als Prozessgas dienende Luft bildet ein Gefrierfluid und kühlt die mit ihr in Kontakt gelangenden Tröpfchen rasch unter die eutektische Temperatur ab, so dass die Tröpfchen gefrieren. Die beim Zersprühen gebildeten, feinen Tröpfchen erstarren dabei sehr schnell und praktisch ohne Entmischung zu festen Teilchen 131. Diese werden durch im Prozessraum nach oben strömende Luft verwirbelt und bilden eine Wirbelschicht. Die Zersprühung der gewünschten Menge des mindestens teilweise flüssigen Materials benötigt selbstverständlich eine gewisse Zeitdauer, die zum Beispiel etwa im Bereich von 5 min bis 30 min liegt. Daher werden insbesondere die zuerst gefrorenen Teilchen während des Sprühvorgangs bereits im ersten Prozessraum durch Gefriertrocknen ein wenig getrocknet, wobei den Teilchen durch Sublimation von Lösungs- und/oder Dispersionsmittel entzogen wird. Es sei hierzu angemerkt, dass die Teilchen während des Gefriervorgangs und/oder unmittelbar anschliessend an diesen eine Tendenz zum Agglomerieren haben. Dabei können aus einigen ursprünglichen, beispielsweise ungefähr 20 µm grossen Teilchen etwas grössere Teilchen mit ungefähr himbeerenartigen Formen entstehen. Es kann daher vorteilhaft sein, eventuell alle Teilchen nach der Beendigung des Sprühvorgangs im ersten Behälter noch während einer kurzen Zeitdauer zu verwirbeln und in einer ersten Gefriertrocknungsphase ein wenig durch Gefriertrocknen zu trocknen, damit die Teilchen beim nachfolgenden Transfer in den zweiten Wirbelschicht-Behälter und bei der an diesem Filter erfolgenden Gefriertrocknung nicht zu unerwünscht grossen Teilchen agglomeriert werden. Dieser allfällige, nach der Beendigung des Sprühvorgangs erfolgende Trocknungsvorgang hat jedoch zum Beispiel nur eine kurze, beispielsweise einige wenige Minuten betragende Dauer, so dass den Teilchen während ihrer gesamten Aufenthaltsdauer im ersten Wirbelschicht-Behälter nur ein relativ kleiner Teil des ursprünglich in ihnen vorhandenen, ursprünglich flüssigen Lösungs- und/oder Dispersionsmittel entzogen wird.

Beim normalen Betrieb sind die Absperrvorrichtungen 51 und die Ventile 106, 108 geschlossen, so dass kein Teilchen-Transfer zwischen verschiedenen Wirbelschicht-Behältern und kein Gas- bzw. Luftaustausch zwischen verschiedenen Gas-Kreisläufen stattfindet. Für den Transfer der im ersten Prozessraum 21 vorhandenen Teilchen in den zweiten Prozessraum werden die Absperrvorrichtungen bei den Enden der den ersten Prozessraum 21 mit dem zweiten Prozessraum 22 verbindenden Leitung 53 und das den ersten Gas-Kreislauf 71 mit dem zweiten Gas-Kreislauf 72 verbindende Ventil 106 vorübergehend geöffnet. Ferner wird die Gas- bzw. Luftumwälzung im ersten sowie zweiten Gas-Kreislauf mit den Ventilen 76 und 81 dieser Kreisläufe derart beeinflusst, dass Prozessgas, d.h. Luft aus dem ersten Prozessraum 21 die in diesem vorhandenen Teilchen pneumatisch durch den Transfer-Durchgang 61 der Transfer-Verbindung 53 in den zweiten Prozessraum 22 fördert. Die Temperatur der Teilchen bleibt beim Transfer unter der eutektischen Temperatur.

Wenn die Teilchen-Charge vom ersten in den zweiten Wirbelschicht-Behälter 12 transportiert wurde, werden die Absperrvorrichtungen 51 der Leitung 53 sowie des Ventils 106 wieder geschlossen. Die in den zweiten Wirbelschicht-Behälter gelangenden Teilchen 131 können in dessen Prozessraum 22 mit der diesen von unten nach oben durchströmenden Luft angehoben und in einer zweiten Gefriertrocknungsphase oder Haupt-Gefriertrocknungsphase weiter getrocknet werden.

Die Teilchen 131 können an sich zeitweise im zweiten Prozessraum 22 verwirbelt werden. Die Strömungsrate der als Prozessgas durch den zweiten Prozessraum 22 geleiteten Luft wird jedoch vorzugsweise so geregelt und bemessen, dass die aus der Transfer-Verbindung 53 in den zweiten Prozessraum 22 gelangenden Teilchen 131 höchstens während einer kurzen Zeitdauer verwirbelt und nach einer kurzen Verwirbelungsdauer oder sofort nach dem Eintritt in den zweiten Prozessraum zum Filter 18 angehoben und zum Anliegen an einer der gasdurchlässigen Flächen der Filterelemente 18a des Filters 18 gebracht werden. Es hat sich nämlich gezeigt, dass der Trocknungsvorgang beim Gefriertrocknen gegenüber einer Trocknung in einer Wirbelschicht wesentlich beschleunigt wird, wenn die Teilchen am Filter 18 anliegen und hängen. Damit die am Filter anliegenden Teilchen möglichst wenig zu grösseren Teilchen agglomeriert werden, können sie - wie schon erwähnt - vor dem Anheben zu dem im zweiten Behälter angeordneten Filter im ersten Prozessraum und/oder im zweiten Prozessraum während einer kurzen Zeitdauer ein wenig vorgetrocknet werden Ferner ist es zweckmässig, die Teilchen von Zeit zu Zeit vorübergehend vom Filter zu lösen. Hierzu können die mindestens zwei Filterelemente 18a des Filters 18 mit der Filter-Reinigungsvorrichtung 19 separat und abwechselnd durch Rütteln und/oder durch Beaufschlagung mit Ultraschall und/oder durch Ausblasen gereinigt und mindestens weitgehend von den an ihnen anliegenden Teilchen befreit werden. Die von einem Filterelement gelösten Teilchen können dann mehr oder weniger weit in den freien Prozessraum hinunter fallen, durch die als Prozessgas dienende Luft eventuell während einer kurzen Zeitdauer im Prozessraum verwirbelt und danach wieder zum Anliegen an einem der Filterelemente 18a gebracht werden. Dabei wird jedes Filterelement 18a des Filters 18 vorzugsweise mindestens jede Stunde und zum Beispiel nach jeweils ungefähr 30 min durch Rütteln oder Ausblasen während einer Zeitdauer gereinigt, die höchstens 3 min und zum Beispiel ungefähr 30 s bis 1 min beträgt. Die Gefriertrocknungsphase im zweiten Prozessraum wird zum Beispiel derart durchgeführt, dass mindestens die meisten Teilchen 131 mindestens 30%, zweckmässigerweise mindestens 50%, vorzugsweise mindestens 70% und zum Beispiel mindestens oder ungefähr 90% der gesamten Gefriertrocknungs-Zeitdauer an einem der Filterelemente 18a anliegen. Unter der letzteren wird dabei die gesamte Zeitdauer verstanden, während der die Teilchen nach der Beendigung der Zersprühung von flüssigem Material und des Gefriervorgangs im zweiten Prozessraum und eventuell vorher bereits im ersten Prozessraum getrocknet werden.

Wie schon beschrieben, hat die in den zweiten Prozessraum eingeleitete Luft eine Temperatur, die höher ist als die Temperatur der in den ersten Prozessraum eingeleitete Luft und beispielsweise nur geringfügig unter der eutektischen Temperatur liegt. Die Teilchen werden daher im zweiten Behälter durch Gefriertrocknen wirkungsvoll, schnell und trotzdem schonend getrocknet. Bei dem im zweiten Behälter 12 stattfindenden Gefriertrocknungsvorgang wird den Teilchen ein wesentlicher Teil, zum Beispiel mindestens ungefähr 50% des ursprünglich in den Tröpfchen bzw. Teilchen enthaltenen, Lösungs- und/oder Dispersionsmittels durch Sublimation entzogen. Die Teilchen erhalten bei der Gefriertrocknung eine lockere, poröse Struktur, so dass sie nachher lyophil sowie insbesondere hydrophil und sehr gut löslich in Wasser sind.

Nachdem die Teilchen im zweiten Wirbelschicht-Behälter 12 getrocknet wurden, wird die Prozessgas-Umwälzung durch den zweiten Prozessraum reduziert und/oder ganz beendet. Ferner werden alle Filterelemente 18a des dem zweiten Prozessraum zugeordneten Filters 18 mit Hilfe der Filter-Reinigungsvorrichtung von den an ihnen anhaftenden Teilchen befreit, so dass diese nach unten sinken. Die Teilchen werden dann in den dritten Wirbelschicht-Behälter transferiert. Dies erfolgt analog wie der vorgängig beschriebene Transfer vom ersten in den zweiten Wirbelschicht-Behälter durch vorübergehendes Öffnen der bei den Verbindungen der Transfer-Verbindung 54 mit den Behältern 12 und 13 vorhandenen Absperrvorrichtungen 51 und des Ventils 108 sowie mit Hilfe von Ventilen des zweiten und dritten Gas-Kreislaufs, so dass die Teilchen pneumatisch durch den Transfer-Durchgang 61 der Transfer-Verbindung 54 gefördert werden.

Danach werden die Teilchen im dritten Prozessraum 23 mit der durch diesen hindurch geleiteten Luft verwirbelt und auf eine oberhalb der eutektischen Temperatur sowie oberhalb 0°C liegende Temperatur erwärmt, die zum Beispiel ungefähr gleich der normalen Raumtemperatur ist. Dabei wird den Teilchen noch etwas Restfeuchte entzogen. Die poröse, lyophile sowie hydrophile Struktur der Teilchen wird dabei durch diese oberhalb der eutektischen Temperatur stattfindende, "konventionelle" Trocknung nicht beeinträchtigt.

Die Teilchen werden nun aus dem dritten Behälter 13 in das Sammelgebinde 57 gebracht. Hierzu wird die den dritten Behälter 13 mit der Leitung 55 verbindende Absperrvorrichtung 51 vorübergehend geöffnet. Ferner wird zum Beispiel das Ventil 76 des dritten Gas-Kreislaufs vorübergehend mindestens teilweise geschlossen und eventuell von der Sterilisiermittel- und Gas-Zufuhrvorrichtung 112 über das diese mit dem dritten Wirbelschicht-Behälter verbindende Ventil 111 frische Luft in den dritten Gas-Kreislauf eingeleitet. Die in das Sammelgebinde 57 gelangenden Teilchen bilden dann das bereits erwähnte, teilchenförmige Gut 58.

Die drei Prozessräume, die Durchgänge der drei Gas-Kreisläufe und die Transfer-Durchgänge werden beim Gefrieren und anschliessenden Trocknen der Teilchen in den drei Prozessräumen sowie der Transfer der Teilchen von einem Prozessraum in den nächsten Prozessraum durch Wände und sonstige Teile im Wesentlichen gasdicht gegen die Umgebung abgeschlossen. Die ganze Herstellung und Verarbeitung der Teilchen kann daher aseptisch erfolgen. Die Teilchen können nötigenfalls ferner auch in gegen die Umgebung abgeschlossenem Zustand sowie aseptisch aus dem dritten Prozessraum in das Sammelgebinde 57 gefördert werden. Da die aus dem dritten Behälter 13 heraus geleiteten Teilchen eine ungefähr mit der normalen Raumtemperatur identische Temperatur haben, dürfen sie jedoch ohne weiteres in Kontakt mit der Umgebungsluft kommen, ohne dass sich Luftfeuchtigkeit auf ihnen niederschlägt, falls dies in Bezug auf die geforderte Reinheit zulässig ist. Ferner kann allenfalls in den dritten Behälter eindringende Umgebungsluft im dritten Behälter ebenfalls keine Kondensation von Luftfeuchtigkeit verursachen.

Nachdem vorgängig die wichtigsten Verfahrensschritte beschrieben wurden, sollen nun noch einige Einzelheiten und Vorteile erläutert werden.

Beim Gefriervorgang wird die durch den ersten Prozessraum strömende Luft erwärmt. Hingegen entziehen die in einem Behälter enthaltenen Teilchen der beim Trocknen von unten nach oben durch diesen Behälter und die Teilchen hindurch geleiteten Luft Wärme, und zwar beim Gefriertrocknen insbesondere die Sublimationswärme. Die Luft und die Teilchen werden daher beim Trocknen abgekühlt. Die Temperatur der durch den ersten Wirbelschicht-Behälter 11 geleiteten Luft soll während der Sprüh- und Gefrierphase und beispielsweise auch während der allenfalls noch im ersten Prozessraum stattfindenden, ersten Gefriertrocknungsphase sowohl beim Einströmen in den ersten Behälter 11 als auch im ganzen Bereich des ersten Prozessraums eine Temperatur haben, die deutlich unter der eutektischen Temperatur liegt und nämlich mindestens 10°C, vorzugsweise mindestens 20°C, noch besser mindestens 30°C und zum Beispiel ungefähr 40°C oder noch mehr niedriger als die eutektische Temperatur ist. Wie schon beschrieben, ist die Temperatur der Luft im zweiten Prozessraum dann höher. Die Durchflussrate der durch den zweiten Prozessraum hindurch geleiteten Luft und die Temperatur dieser Luft beim Einströmen in den zweiten Prozessraum werden vorzugsweise derart festgelegt, dass die Luft und die Teilchen während des ganzen im zweiten Prozessraum stattfindenden Gefriertrocknungsvorgangs immer eine Temperatur haben, die höchstens 20°C, vorzugsweise höchstens 10°C und zum Beispiel höchstens 5°C sowie mindestens 1°C unter der eutektischen Temperatur liegt.

Beim Verwirbeln, Gefrieren und Trocknen von Teilchen 131 können auch im ersten und dritten Wirbelschicht-Behälter 11 bzw. 13 auch durch Gefrieren gebildete Teilchen und durch Abrieb aus diesen gebildete, feinere Staubteilchen zu den Filtern 18 dieser Behälter angehoben und an den Filtern hängen bleiben. Die an den Filtern hängenden Teilchen können nach Bedarf mit Hilfe der Filter-Reinigungsvorrichtungen 19 durch Rütteln oder Wegblasen von den Filtern gelöst werden, so dass sie nach unten sinken. Solche "trockene" Filterreinigungen können zum Beispiel jeweils durchgeführt werden, bevor eine Charge von Teilchen aus einem Behälter heraus in den nächsten Behälter oder in das Sammelgebinde 57 gebracht werden.

Beim Entwickeln eines neuen Produkts kann zum Beispiel nur eine einzelne Charge von Teilchen im ersten Behälter gefroren sowie ein wenig getrocknet und danach in den andern Behältern weiterbehandelt, insbesondere getrocknet werden. Dabei braucht eventuell nur durch den gerade die Teilchen enthaltenden Behälter hindurch Luft umgewälzt zu werden.

Die Einrichtung kann zum Beispiel konzipiert sein, um in einem Behälter eine Teilchen-Charge mit einer beispielsweise ungefähr 0,1 kg bis ungefähr 1 kg betragenden Gesamtmasse zu gefrieren und/oder zu trocknen. Für die kommerzielle Produktion können dann in einer quasi-kontinuierlichen Betriebsweise in allen drei Behältern gleichzeitig verschiedene Teilchen-Chargen behandelt und sukzessive von einem Behälter in den jeweils nächsten Behälter transferiert werden. Dies ermöglicht, mit relativ kleinen, gut für die Entwicklung geeigneten Wirbelschicht-Behältern im Bedarfsfall ohne eine "scale up" Prozedur und ohne neue Validierung auch relativ grosse Mengen eines Gutes herzustellen. Da jeder Wirbelschicht-Behälter bei der quasi-kontinuierlichen Behandlung mehrerer Chargen immer ungefähr auf der gleichen Temperatur gehalten werden kann, benötigt die Einrichtung auch nur wenig Energie.

Die Kompressionskältemaschinen der Kühlvorrichtungen 79 erzeugen Abwärme. Zumindest beim quasi-kontinuierlichen Betrieb wird mit einem Fluid Abwärme von der Kühl- und Trocknungsvorrichtung 79 des ersten Gas-Kreislaufs 71 dem Wärmetauscher der Heizvorrichtung 80 des zweiten Gas-Kreislaufs 72 zugeführt und dort zum Erwärmen der im zweiten Gas-Kreislauf von der Kühl- und Trocknungsvorrichtung gekühlten und getrockneten Luft verwendet. Desgleichen wird Abwärme der Kühl- und Trocknungsvorrichtung 79 des zweiten Gas-Kreislaufs verwendet, um die im dritten Gas-Kreislauf von der Kühl- und Trocknungsvorrichtung 79 zum Wärmetauscher der Heizvorrichtung 80 geleitete Luft zu erwärmen. Ferner kann auch der Heizvorrichtung 80 des ersten Gas-Kreislaufs Abwärme von einer der Kühl- und Trocknungsvorrichtungen zugeführt werden. Diese Verwertung der von den Kühl- und Trocknungsvorrichtungen 79 erzeugten Abwärme trägt ebenfalls zu einem niedrigen Energieverbrauch bei.

Mit den Taupunkttemperatur-Sensoren 87, 88 können die Taupunkttemperaturen der Luft gemessen werden, die in einen Wirbelschicht-Behälter einströmt bzw. aus diesem ausströmt. Die Differenz dieser Taupunkttemperaturen gibt ein Mass für die den Teilchen beim Trocknen entzogene Wassermenge. Dies ermöglicht wiederum, die Zeitdauer festzulegen und zu steuern, während der eine Teilchen-Charge in einem Behälter getrocknet wird.

Die eventuell mindestens beim zweiten Behälter 12 vorhandene, nur schematisch gezeichnete Wärme-Energiequelle 43 ermöglicht, den sich im freien Bereich des zweiten Prozessraums befindenden und/oder am Filter anliegenden Teilchen 131 Energie in Form elektromagnetischer Strahlen und/oder Wellen zuzuführen und die Teilchen dadurch zu erwärmen, wobei diese Energiezufuhr berührungslos, ohne Wärmeleitung sowie ohne Konvektion und also ohne vorherige Erwärmung des Prozessgases möglich ist. Stattdessen oder zusätzlich kann den am Filterelementen 18a des Filters 18 anliegenden Teilchen durch Beheizen der Filterelemente Wärme zugeführt werden. Im Übrigen kann diese Wärmezufuhr nach Bedarf einfach und schnell gesteuert, eingeschaltet, geändert und ausgeschaltet werden, so dass die Temperatur der Teilchen während der ganzen im zweiten Prozessraum erfolgenden Gefriertrocknungsphase auf einen Wert geregelt werden kann, der knapp unter der eutektischen Temperatur liegt.

Die durch die Behälter 11, 12, 13 strömende Luft nimmt den Teilchen 131 entzogene Feuchtigkeit auf. Diese wird von den Verdampfern der Kältemaschinen 93 ausgefroren. Die Ausrüstung jeder Kühl- und Trocknungsvorrichtung 79 mit zwei Kältemaschinen 93 ermöglicht, diese Kältemaschinen abwechselnd zum Kühlen zu benutzen und abzutauen. Beim Abtauen wird die entstehende Flüssigkeit jeweils durch den Abtau-Flüssigkeits-auslass 97 aus der betreffenden Kältemaschine abgeleitet.

Der teilweise in der Fig. 3 ersichtliche erste Wirbelschicht-Behälter 211 ist zum Beispiel ähnlich wie der erste Wirbelschicht-Behälter 21 ausgebildet, besitzt eine metallische Wandung 215 und enthält einen Prozessraum 221, der oben durch einen inneren Wandungsteil 214 und ein Filter 218 begrenzt ist. Dieses weist beispielsweise mindestens ein am inneren Wandungsteil 214 des Behälters befestigtes Filterelement 218a, nämlich mindestens zwei je aus einer Filterpatrone bestehende Filterelemente 218a auf. Diese Filterelemente 218a bzw. Filterpatronen können gleich ausgebildet sein, wie die als mögliche Variante der Filterelemente 18a beschriebenen Filterpatronen. Eine dem Filter zugeordnete Filter-Reinigungsvorrichtung 219 besitzt für jede Filterpatrone ein mit dieser verbundenes Gas-Reinigungsorgan 219a zum Ausblasen der Filterpatrone.

Die den Wirbelschicht-Behälter 211 aufweisende Einrichtung besitzt ferner eine Nass-Reinigungsvorrichtung 220 zum Nass-Reinigen, d.h. Waschen und Spülen, von Teilen der Innenräume der verschiedenen Behälter, insbesondere der Prozessräume, sowie der Durchgänge der Transfer-Verbindungen, eventuell von Teilen der Durchgänge der Gas-Kreisläufe, der diese Innenräume und Durchgänge begrenzenden Wände und sonstigen Teile sowie von in diesen Innenräumen und Durchgängen enthaltenen Teilen. Die Nass-Reinigungsvorrichtung weist zum Beispiel an verschiedenen Stellen angeordnete Sprühvorrichtungen 220a auf, von denen einige in der Fig. 3 ersichtlich und mit 220a bezeichnet sind. Jede der gezeichneten Sprühvorrichtungen 220a besitzt ein am inneren Wandungsteil 214 befestigtes Gehäuse und eine verschiebbare Sprühdüse mit einem drehbaren Düsenkopf. Die Sprühdüse kann von einer Ruhe-Stellung ausserhalb des Prozesssraums in eine strichpunktiert gezeichnete Sprüh-Stellung verschoben werden, in der sie in den Prozessraum hineinragt, um eine Reinigungsflüssigkeit gegen die an den Prozessraum angrenzenden Aussenflächen der Filterpatronen 218a und die Innenfläche der den Prozessraum 221 umschliessenden, metallischen Behälterwandung zu sprühen.

Die Nass-Reinigungsvorrichtung ermöglicht, die Prozessräume, Siebböden, Filter, Transfer-Durchgänge und soweit nötig sonstigen Bereiche der Innenräume der Wirbelschicht-Behälter und Teile der Durchgänge der restlichen Gas-Kreisläufe vor und/oder nach der Herstellung einer Menge eines teilchenförmigen Gutes in gegen die Umgebung abgeschlossenem Zustand mit einer Reinigungsflüssigkeit zu waschen und zu spülen. Danach kann die Einrichtung, wie es schon für die Einrichtung gemäss Fig. 1 beschrieben wurde, ebenfalls in gegen die Umgebung abgeschlossenem Zustand steril gemacht werden. Die Behälter und die sonst zu reinigenden Teile sollen möglichst keine Toträume aufweisen und derart ausgebildet sein, dass die Reinigungsflüssigkeit überall gut abfliessen kann. Die Prozesse, um die Einrichtung trocken sowie nass zu reinigen und steril machen zu können - wie übrigens auch das eigentliche Herstellungsverfahren - automatisch gesteuert werden.

Die Filterpatronen der Filter können - wie bei der Beschreibung der Figuren 1 und 3 erwähnt- ein metallisches Filtrationselement aufweisen und mit einer Reinigungsvorrichtung verbunden sein, um die Filterpatronen durch Ausblasen "trocken" zu reinigen. Filterpatronen dieser Art und Reinigungsvorrichtungen zum Ausblasen von diesen sind zum Beispiel aus der US 5 868 807 A sowie der entsprechenden EP 0 781 585 A bekannt. Die in der Fig. 3 ersichtliche Nass-Reinigungsvorrichtung 220 ist zum Beispiel teilweise gleich oder ähnlich ausgebildet wie bei der US 5 766 281 A sowie der entsprechenden EP 0 781 587 A. Der Inhalt dieser Dokumente wird hiermit in diese Beschreibung aufgenommen, soweit sich keine Widersprüche ergeben.

Der Prozessraum 221 enthält noch eine Sprühdüse 231, die zum Beispiel ähnlich wie die Sprühdüse 31 als Zweistoffdüse und/oder eventuell als Ultraschalldüse ausgebildet ist und zum Zersprühen eines mindestens teilweise flüssigen Anfangs-Materials 235 dient. Ferner sind noch einige um die Sprühdüse 231 herum verteilte Sprühdüsen 232 vorhanden, um ein Kühlmittel, zum Beispiel ein verflüssigtes, cryogenes Gas, etwa flüssigen Stickstoff, oder eventuell Trockeneis (CO₂) in trockenem, pulverförmigem Zustand mit Hilfe von einem Gas oder in Aceton gelöstes Kohlendioxid (CO₂) in den Prozessraum hinein zu sprühen. Ferner wird beispielsweise analog wie bei der Einrichtung gemäss der Fig. 1 Prozessgas von unten nach oben durch den ersten Prozessraum 221 geleitet und in einem Gas-Kreislauf umgewälzt, um die durch Gefrieren gebildeten Teilchen zu verwirbeln.

Das unten durch einen gasdurchlässigen Sieb-Boden hindurch in den ersten Prozessraum 221 geleitete Prozessgas wird von dem Einleiten vorzugsweise auf eine Temperatur gekühlt, die weniger als 0°C, besser höchstens -20°C und zum Beispiel ungefähr -60°C bis -30°C beträgt. Das zersprühte Kühlmittel bildet gewissermassen einen Vorhang, der einen Bereich des vom zersprühten Anfangs-Material 235 gebildeten Strahls umschliesst. Das zersprühte Kühlmittel vermischt sich mit dem unten in den ersten Prozessraum 221 geleiteten Prozessgas, verdampft und bildet dann einen Bestandteil des Prozessgases. Dadurch wird das Prozessgas mindestens in einem Gefrier-Raumbereich, d.h. mindestens in einem Teilbereich des ersten Prozessraums, nämlich mindestens in der Umgebung Mündung der Sprühdüse 231, stark abgekühlt. Das Gemisch aus ursprünglich unten eingeleiteten Prozessgas und aus zersprühtem und mehr oder weniger verdampftem Kühlmittel bildet dann ein kaltes Gefrierfluid, dessen Temperatur im Gefrier-Raumbereich vorzugsweise höchstens -30°C und zum Beispiel ungefähr oder höchstens -60°C beträgt so dass die aus dem zersprühten Anfangs-Material 235 gebildeten Tröpfchen schnell gefrieren.

Bei der in Fig. 3 gezeichneten Variante des ersten Behälters könnten jedoch eventuell das Filter 18 und der über diesem angeordnete, zum Ableiten des filtrierten Prozessgases dienende Gas-Auslass weggelassen und der erste Prozessraum 221 beim Wandungsteil 214 gegen oben überall dicht abgeschlossen werden. Das während des Gefriervorgangs unten durch den gasdurchlässigen Sieb-Boden in den ersten Prozessraum geleitete Prozessgas und das durch Verdampfen von Kühlmittel gebildete Gas können dann zusammen durch eine Transfer-Verbindung in den zweiten Prozessraum hinein gesaugt werden. Die den ersten Prozessraum 221 mit dem zweiten Prozessraum verbindende Transfer-Verbindung kann zum Beispiel als Wirbelrinne bzw. Wirbelkanal ausgebildet sein und mindestens stellenweise einen gasdurchlässigen Sieb-Boden aufweisen. Die Wirbelrinne bzw. der Wirbelkanal ist zum Beispiel ungefähr horizontal sowie etwa 0,2 m bis 2 m und vorzugsweise 0,5 m bis 1 m lang. Beim Transfer von Teilchen wird dann gekühltes Prozessgas von unten her durch den Sieb-Boden des Wirbelkanals in den sich über dem Sieb-Boden befindenden, als Transfer-Durchkang dienenden Bereich des Wirbelkanal-Innenraums geleitet.

Der den ersten Prozessraum unten begrenzende Sieb-Boden und der Sieb-Boden des Wirbelkanals sind zum Beispiel als Lochsieb- oder Spaltsieb- oder sogenannter Conidursieb-Boden ausgebildet. Ein Conidursieb-Boden hat Löcher, insbesondere Schlitze, die das durchströmende Gas in eine mit einer Vertikalen einen Winkel bildenden, geneigte oder fast horizontale Richtung lenken.

Die bei dieser Variante der Einrichtung während des Gefriervorgangs durch Gefrieren von Tröpfchen im ersten Prozessraum 221 gebildeten Teilchen können im ersten Prozessraum nach unten sinken und werden dann kontinuierlich zusammen mit Prozessgas in den Wirbelkanal hinein und durch diesen hindurch in den zweiten Prozessraum transportiert. Die Teilchen können dabei eventuell bereits im ersten Prozessraum ein wenig verwirbelt und danach im Wirbelkanal transportiert und gleichzeitig ziemlich stark verwirbelt werden. Dabei werden die Teilchen bereits ein wenig durch Gefriertrocknen getrocknet. Der Transfer durch den Wirbelkanal geschieht in gegen die Umgebung abgeschlossenem Zustand, analog wie es vorgängig für die pneumatische Förderung (ohne besondere Verwirbelung) beschrieben wurde. Das in den ersten Prozessraum und in den Wirbelkanal geleitete und durch den letzteren in den zweiten Prozessraum strömende Prozessgas wird zusammen mit dem unten durch einen Sieb-Boden in den zweiten Prozessraum geleiteten Prozessgas durch den zweiten Prozessraum hindurch nach oben und durch ein Filter hindurch aus dem zweiten Prozessraum herausgesaugt. Wenn durch sukzessives Gefrieren von Tröpfchen eine Charge von Teilchen gebildet und in den zweiten Prozessraum transportiert wurde, wird die Zufuhr von Prozessgas zum ersten Prozessraum und zum Wirbelkanal beendet und die durch den Wirbelkanal gebildete Transfer-Verbindung zum Beispiel mit einer Absperrvorrichtung geschlossen.

Soweit vorgängig nichts anderes geschrieben wurde, können die im ersten Behälter 211 durch Gefrieren erzeugten Teilchen gleich oder ähnlich wie bei der Einrichtung gemäss der Fig. 1 behandelt, insbesondere chargenweise im zweiten Prozessraum und danach im dritten Prozessraum getrocknet werden.

Die Einrichtungen und Verfahren können auf verschiedene Arten modifiziert werden. Zunächst können Merkmale der anhand der Figuren 1 bis 3 beschriebenen Einrichtungs- und Verfahrensvarianten miteinander kombiniert werden. Bei der in der Fig. 1 dargestellten Einrichtung könnte zum Beispiel die den ersten Prozessraum mit dem zweiten Prozessraum verbindende Transfer-Verbindung oder jede Transfer-Verbindung eventuell als ungefähr horizontaler Wirbelkanal ausgebildet sein, der in seinem Innenraum einen gasdurchlässigen Sieb-Boden enthält.

Die Einrichtung könnte ferner statt drei eventuell nur zwei Behälter mit je einem Prozessraum aufweisen. In diesem Fall kann zum Beispiel der Gefriervorgang und eventuell eine erste, kurze Gefriertrocknung im Prozessraum des ersten Behälters durchgeführt werden. Die Haupt-Gefriertrocknungsphase, das Erwärmen auf Raumtemperatur und die Nachtrocknung oberhalb der eutektischen Temperatur können dann im zweiten Behälter erfolgen. Stattdessen können der Gefriervorgang und die ganze Gefriertrocknung im ersten Behälter bei einer unter der eutektischen Temperatur liegenden Temperatur durchgeführt werden. Durch den zweiten Behälter kann dann ungefähr Raumtemperatur aufweisende Luft hindurch geleitet werden, um die Teilchen ungefähr auf Raumtemperatur zu erwärmen. Derartige, nur zwei Behälter und zwei Prozessräume aufweisende Einrichtungen ermöglichen ebenfalls noch eine quasi-kontinuierliche Herstellung von Teilchen, bei der die zwei Prozessräume zeitweise gegeneinander abgeschlossen sind und verschiedene Teilchen-Chargen enthalten. Die Einrichtung könnte jedoch auch mehr als drei Wirbelschicht-Behälter aufweisen, so dass der Trocknungsvorgang auf noch mehr Behälter und Prozessräume aufgeteilt werden könnte.

Die für die Entnahme der Teilchen aus dem letzten Wirbelschicht-Behälter dienende Leitung 55 kann eventuell noch mit einer Schleuse versehen werden, die verhindert, dass bei und nach der Teilchen-Entnahme beispielsweise nicht-sterile Umgebungsluft in den letzten Wirbelschicht-Behälter eindringt. Eine solche Schleuse kann insbesondere zweckmässig sein, wenn die beim normalen Betrieb im letzten Gas-Kreislauf umgewälzte Luft einen unter dem Umgebungs-Luftdruck liegenden Druck hat. Ferner könnte der Teilchen-Auslass 49 des letzten Behälters 13 und/oder die Leitung 55 eventuell mit einem Zyklon versehen werden. Falls die in den verschiedenen Gas-Kreisläufen umgewälzte Luft verschiedene Drücke hat, kann eventuell auch mindestens eine der die verschiedenen Behälter verbindenden Transfer-Verbindungen 53, 54 mit einer Schleuse versehen werden.

Im Übrigen könnte jede Kühl- und Trocknungsvorrichtung 79 Wärmerückgewinnmittel haben, die mit dem Wärmetauscher der Heizvorrichtung 80 desselben Gas-Kreislaufs verbunden sind, so dass die Wärme innerhalb jedes Gas-Kreislaufs wieder verwendet werden kann.

Ferner könnte das von unten nach oben durch die Wirbelschicht-Behälter geleitete Prozessgas und das Sprühgas statt aus Luft aus Stickstoff oder aus einem andern sauerstofflosen Gas bestehen. Zudem könnte eventuell noch flüssiger Stickstoff oder ein anderes, verflüssigtes Gas in den ersten Prozessraum eingesprüht werden, um die zersprühte Lösung und/oder Dispersion möglichst schnell abzukühlen und zu gefrieren. Des Weiteren könnte die Sprühdüse als eine Einstoffdüse statt als Zweistoffdüse ausgebildet werden.

Eventuell kann ein aus einer Lösung und/oder Dispersion bestehendes, mindestens teilweise flüssiges Material 35 zersprüht werden, das keine eutektische Temperatur hat. In diesem Fall ist der Begriff "eutektische Temperatur" im vorangehenden Beschreibungsteil - soweit sinnvoll jeweils durch den Begriff "tiefste Gefriertemperatur" zu ersetzen. Unter dieser wird dabei die Temperatur verstanden, bei der das mindestens teilweise flüssige Material beim Abkühlen bei allen möglichen Konzentrationen seiner Komponenten vollständig erstarrt.

## Patentansprüche

1. Verfahren zur Herstellung eines teilchenförmigen Gutes (58) aus einem mindestens teilweise flüssigen, ein Lösungs- und/oder Dispersionsmittel enthaltenden Material (35, 235),
- wobei zur Durchführung des Verfahrens eine Wirbelschicht-Einrichtung (1) mit mehreren Wirbelschicht-Behältern (11, 12,13, 211) verwendet wird, von denen jeder eine Wand (15, 215) aufweist und einen Prozessraum (21, 22, 23, 221) enthält, der am unteren Ende durch einen gasdurchlässigen Sieb-Boden (17) und am oberen Ende mindestens zu einem grossen Teil durch ein Filter (18) begrenzt ist,
- wobei die Wirbelschicht-Behälter (11, 12, 13, 211) einen ersten Behälter (11, 211) mit einem ersten Prozessraum (21, 221) und einen zweiten Behälter (12) mit einem zweiten Prozessraum (2) umfassen,
- wobei jeder Behälter (11, 12, 13, 211) einen Teilchen-Auslass (45, 47, 49) mit einem Durchgang aufweist, der unmittelbar oberhalb des gasdurchlässigen Sieb-Bodens (17) in den Prozessraum (21, 22, 23, 221) mündet,
- wobei der zweite Behälter (12) einen Teilchen-Einlass (46) mit einem in den zweiten Prozessraum mündenden Durchgang aufweist,
- wobei der Teilchen-Auslass (45) des ersten Behälters (11, 211) durch eine Transfer-Verbindung (53) mit dem Teilchen-Einlass (46) des zweiten Behälters (12) verbunden ist und
- wobei Teilchen (131) mindestens zum Teil durch Gefriertrocknen in einem der Prozessräume (21, 22, 23, 211) getrocknet werden **dadurch gekennzeichnet,**
- **dass** der erste Behälter (11, 211) der verwendeten Einrichtung (1) eine Sprühvorrichtung mit mindestens einer Sprühdüse (31, 231) mit einer nach unten gerichteten Austrittsöffnung aufweist,
- **dass** das mindestens teilweise flüssige Material (35, 235) mit der Sprühvorrichtung im ersten Prozessraum (21, 221) in Tröpfchen zersprüht wird und diese durch Kontakt mit einem Gefrierfluid zu Teilchen (131) gefroren werden,
- **dass** die Teilchen (131) danach mindestens zum Teil durch das Gefriertrocknen im ersten und/oder zweiten Prozessraum (21, 22, 221) getrocknet werden,
- **dass** beim Gefriertrocknen derart Prozessgas von unten nach oben durch den zum mindestens teilweisen Gefriertrocknen der Teilchen (131) dienenden Prozessraum (21, 22, 221) und durch das Filter (18, 218) geleitet wird, und
- **dass** mindestens ein wesentlicher Teil der Teilchen (131) mindestens während eines wesentlichen Teils der Gefriertrocknung am Filter (18, 218) anliegt.

2. Verfahren nach Anspruch 1, **dadurch gekennzeichnet, dass** beim Gefriertrocknen am Filter (18, 218) anliegende Teilchen (131) von Zeit zu Zeit vom Filter (18) gelöst und danach durch das Prozessgas wieder zum Anliegen am Filter (18, 218) gebracht und an diesem weiter getrocknet werden.

3. Verfahren nach Anspruch 2, **dadurch gekennzeichnet, dass** das zum Gefriertrocknen verwendete Filter (18, 218) mindestens ein Filterelement (18a, 218a) aufweist, das mindestens jede Stunde mindestens vom grössten Teil der an ihm anliegenden Teilchen (131) befreit wird.

4. Verfahren nach einem der Ansprüche 1 bis 3, **dadurch gekennzeichnet, dass** das zur Gefriertrocknung verwendete Filter (18, 218) mindestens zwei Filterelemente (18a, 218a) aufweist, die während der Gefriertrocknung separat und abwechselnd von an ihnen anliegenden Teilchen (131) befreit werden.

5. Verfahren nach Anspruch 3 oder 4, **dadurch gekennzeichnet, dass** das bzw. jedes Filter (18, 218) bzw. gegebenenfalls vorhandene Filterelemente (18a, 218a) des bzw. jedes Filters (18, 218) zum Lösen der an ihm haftenden Teilchen (131) gerüttelt und/oder mit Ultraschall beaufschlagt und/oder ausgeblasen wird.

6. Verfahren nach einem der Ansprüche 1 bis 5, **dadurch gekennzeichnet, dass** durch sukzessives Zersprühen von Flüssigkeit und Gefrieren der Tröpfchen eine Teilchen-Charge gebildet wird und dass mindestens die meisten Teilchen (131) mindestens 30%, zweckmässigerweise mindestens 50% und vorzugsweise mindestens 70%, einer Gefriertrocknungs-Zeitdauer, in der die Teilchen (131) nach der Erzeugung der Teilchen-Charge durch Gefriertrocknen getrocknet werden, am Filter (18, 218) anliegen.

7. Verfahren nach einem der Ansprüche 1 bis 6, **dadurch gekennzeichnet, dass** das zum Gefriertrocknen der Teilchen (131) in den diese enthaltenden Prozessraum (21, 22, 221) geleitete Prozessgas eine höhere Temperatur als das Gefrierfluid hat, wobei das Gefrierfluid vorzugsweise eine Temperatur hat, die höchstens -30 °C und zum Beispiel -80 °C bis -40 °C beträgt und wobei die Temperatur des zum Gefriertrocknen der Teilchen (131) in den diese enthaltenden Prozessraum (21, 22, 221) geleiteten Prozessgases zweckmässigerweise mindestens 10 °C höher, vorzugsweise mindestens 20 °C höher und zum Beispiel mindestens 30 °C höher ist als die Temperatur des Gefrierfluids und zum Beispiel mindestens -30 °C sowie zum Beispiel weniger als 0 °C beträgt.

8. Verfahren nach einem der Ansprüche 1 bis 7, **dadurch gekennzeichnet, dass** zur Bildung des Gefrierfluids Prozessgas gekühlt und in einen zum Gefrieren der Tröpfchen dienenden Gefrier-Raumbereich geleitet wird und/oder
dass ein Kühlmittel (236) in den Gefrier-Raumbereich hinein gesprüht wird, das vorzugsweise ein verflüssigtes Gas, beispielsweise flüssigen Stickstoff, oder trockenes, pulverförmiges Trockeneis oder Aceton und in diesem gelöstes Kohlendioxid aufweist, wobei zum Beispiel mindestens ein Strahl des mindestens teilweise flüssigen Materials (235) erzeugt wird und zum Beispiel Kühlmittel (236) um einen Bereich dieses Strahls herum zersprüht wird.

9. Verfahren nach einem der Ansprüche 1 bis 8, **dadurch gekennzeichnet, dass** die Teilchen (131) nach ihrer in einem Prozessraum (21, 22, 23, 221) erfolgten Erzeugung und/oder Trocknung durch den Teilchen-Auslass (45, 47, 49) aus dem Prozessraum (21, 22, 23, 221) abgeleitet werden und
dass die aus dem ersten Prozessraum (21, 221) abgeleiteten Teilchen (131) durch die Transfer-Verbindung (53) und den Teilchen-Einlass (46) des zweiten Behälters (12) in den zweiten Prozessraum (22) transferiert werden,
wobei bei der Transfer-Verbindung (53) vorhandene Absperrvorrichtungen (51) zum Ableiten der Teilchen (131) aus dem Prozessraum (21, 22, 23, 221) des Behälters (11, 12, 13, 211) vorübergehend geöffnet werden.

10. Verfahren nach einem der Ansprüche 1 bis 9, **dadurch gekennzeichnet, dass** beim Zersprühen und Gefrieren des mindestens teilweise flüssigen Materials (35, 235) durch den unten am ersten Prozessraum (21, 221) angeordneten, gasdurchlässigen Boden (17) hindurch Prozessgas in den ersten Prozessraum (21, 221) hineingeleitet wird und dass die im ersten Prozessraum (21, 221) durch Gefrieren gebildeten Teilchen (131) mit Gas durch die Transfer-Verbindung (53) in den zweiten Prozessraum (22) transferiert werden, wobei zum Beispiel durch sukzessives Gefrieren von Teilchen (131) im ersten Prozessraum (21, 221) eine Teilchen-Charge erzeugt wird, die bereits vorhandenen Teilchen (131) während der Erzeugung neuer Teilchen (131) verwirbelt und die Teilchen (131) nach dem Gefrieren der ganzen Teilchen-Charge in den zweiten Prozessraum (22) transferiert werden oder wobei zum Beispiel die durch Gefrieren gebildeten Teilchen (131) während der Erzeugung einer Teilchen-Charge fortlaufend vom ersten Prozessraum (21, 221) in den zweiten Prozessraum (22) transferiert werden und wobei die Transfer-Verbindung (53) eventuell als Wirbelrinne mit einem mindestens stellenweise gasdurchlässigen Boden ausgebildet ist und eventuell während des Transfers der Teilchen (131) Gas durch einen gasdurchlässigen Boden der Transfer-Verbindung (53) in diese geleitet wird, so dass die Teilchen (131) zum Beispiel in der Transfer-Verbindung (53) verwirbelt und zum Beispiel bereits einer Gefriertrocknung unterzogen werden.

11. Verfahren nach einem der Ansprüche 1 bis 10, **dadurch gekennzeichnet, dass** die Teilchen (131) nach der Gefriertrocknung auf eine Temperatur oberhalb von 0°C und/oder oberhalb der eutektischen Temperatur der Teilchen erwärmt werden,
dass das Erwärmen über die Temperatur von 0°C und/oder die eutektische Temperatur noch im selben Prozessraum (21, 22, 221) wie die Gefriertrocknung stattfindet oder
dass die Teilchen nach der Gefriertrocknung durch die bzw. eine Transfer-Verbindung (53, 54) in einen andern Prozessraum (23) transferiert und in diesem über die Temperatur von 0°C und/oder die eutektische Temperatur erwärmt werden,
dass zum Erwärmen der Teilchen (131) Prozessgas von unten nach oben durch den die zu erwärmenden Teilchen (131) enthaltenden Prozessraum (22, 23) geleitet wird und die Teilchen (131) dabei verwirbelt und eventuell noch getrocknet werden und
dass die Teilchen (131) nach dem Erwärmen durch den Teilchen-Auslass (47, 49) des betreffenden Behälters (12, 13) aus letzterem abgeleitet werden.

12. Verfahren nach Anspruch 11, **dadurch gekennzeichnet, dass** die Teilchen in einem letzten Prozessraum (23) verwirbelt und getrocknet werden, und
dass das beim Erwärmen der Teilchen (131) zum Verwirbeln von diesen dienende Prozessgas von unten nach oben durch den letzten Prozessraum (23) geleitet wird und eine Temperatur hat, die mehr als 0 °C und zum Beispiel mindestens 10 °C bis zum Beispiel höchstens 30 °C beträgt.

13. Verfahren nach einem der Ansprüche 1 bis 12, **dadurch gekennzeichnet, dass** die Wände (15, 215), die gasdurchlässigen Böden (17), die Filter (18, 218) und sonstige Teile, welche die Prozessräume (21, 22, 23, 221) und einen Durchgang (61) der oder jeder Transfer-Verbindung (53, 54) begrenzen, vor und/oder nach der Herstellung einer Menge des teilchenförmigen Gutes (58) in im Wesentlichen gegen die Umgebung abgeschlossenen Zustand durch Einleiten von einem gasförmigen und/oder einem flüssigen Sterilisiermittel, beispielsweise Wasserdampf, heisser Luft oder flüssigem Alkohol oder Wasserstoffsuperoxid, steril gemacht werden.

14. Verfahren nach einem der Ansprüche 1 bis 12, **dadurch gekennzeichnet, dass** chargenweise Teilchen (131) gefroren und getrocknet werden und dass mindestens zeitweise mindestens zwei verschiedene Prozessräume (21, 22, 23, 221) gegeneinander abgeschlossen werden und gleichzeitig verschiedene Chargen von Teilchen (131) enthalten.

15. Verfahren nach einem der Ansprüche 1 bis 14, **dadurch gekennzeichnet, dass** Gas-Leitmittel (65) verwendet werden, die zusammen mit dem zum Gefriertrocknen dienenden Prozessraum (22) einen Gas-Kreislauf (72) bilden, dass das Prozessgas in normalen Betriebsphasen im Gas-Kreislauf (72) durch den Prozessraum (22) umgewälzt wird und dass das umgewälzte Prozessgas nach dem Austritt aus dem zum Gefriertrocknen dienenden Prozessraum (22) mit einer Kühl- und Trocknungsvorrichtung (79) gekühlt sowie getrocknet und danach noch vor dem Einleiten in den Prozessraum (22) in einer einen Wärmetauscher aufweisenden Heizvorrichtung (80) erwärmt wird, wobei zum Beispiel Abwärme, die von der zu diesem Gas-Kreislauf (72) gehörenden Kühl- und Trocknungsvorrichtung (79) oder zum Beispiel von einer Kühl- und Trocknungsvorrichtung (79) erzeugt wird, die zu einem anderen Gas-Kreislauf (71) mit einem andern Prozessraum (21, 221) gehört, zum Wärmetauscher geleitet und in diesem zum Erwärmen des Prozessgases verwendet wird.

16. Verfahren nach einem der Ansprüche 1 bis 15, **dadurch gekennzeichnet, dass** den Teilchen (131) mindestens während eines Teils der Gefriertrocknung durch elektromagnetische Strahlen und/oder Wellen, zum Beispiel Infrarotlicht und/oder Mikrowellen, und/oder über das Filter (18) Energie zum Erwärmen der Teilchen (131) zugeführt wird.

17. Verfahren nach einem der Ansprüche 1 bis 16, **dadurch gekennzeichnet, dass** der Druck des Prozessgases in dem zur Gefriertrocknung verwendeten Prozessraum (21, 22, 221) während mindestens eines Teils der Gefriertrocknung kleiner als der Umgebungsluftdruck ist, eventuell höchstens 900 Hektopascal und zum Beispiel 50 Hekopascal bis 300 Hektopascal beträgt.

18. Verfahren nach einem der Ansprüche 1 bis 17, **dadurch gekennzeichnet, dass** das ursprünglich mindestens teilweise flüssige Material (35, 235) mindestens einen Wirkstoff und/oder Hilfsstoff für ein Arzneimittel und/oder Mikroorganismen und/oder Zellen für die Behandlung von Menschen und/oder Tieren und/oder mindestens einen Stoff für diagnostische Zwecke aufweist, wobei das Material beispielsweise hitzeempfindlich ist.

19. Verfahren nach einem der Ansprüche 1 bis 18, **dadurch gekennzeichnet, dass** das den zum Gefriertrocknen verwendeten Prozessraum (21, 22, 221) oben begrenzende Filter (18, 218) eine gasdurchlässige Filterfläche hat, die grösser ist als eine Querschnittsfläche eines das Filter (18, 218) enthaltenden Behälter-Innenraumbereichs beim unteren Ende des Filters (18, 218), wobei diese Filterfläche zweckmässigerweise mindestens 3-mal und vorzugsweise mindestens 5-mal grösser als die genannte Querschnittsfläche ist, wobei das Filter (18, 218) vorzugsweise mindestens eine ungefähr vertikale, gasdurchlässige Patrone oder mindestens einen ungefähr vertikalen, gasdurchlässigen Strumpf mit einer Länge hat, die zweckmässigerweise mindestens 1 m, vorzugsweise mindestens 1,5 m und zum Beispiel mindestens 2 m beträgt und wobei der zum Gefriertrocknen verwendete Prozessraum (21, 22, 221) sich vorzugsweise mindestens in einem Bereich nach oben erweitert.

20. Verfahren nach einem der Ansprüche 1 bis 19, **dadurch gekennzeichnet, dass** der zum Gefriertrocknen verwendete Prozessraum (21, 22, 221) durch mindestens eine Transfer-Verbindung (53, 54) mit einem andern, oben ein Filter (18, 218) aufweisenden Prozessraum (21, 23, 221) zum Gefrieren der Tröpfchen oder zum Verwirbeln und Trocknen der Teilchen (131) verbunden ist, dass das Filter (18, 218) jedes Prozessraums (21, 22, 23, 221) mindestens einen gasdurchlässigen Strumpf oder mindestens eine gasdurchlässige Patrone aufweist und dass der bzw. jeder Strumpf oder die bzw. jede Patrone des zum Gefriertrocknen dienenden Filters (18, 218) länger ist als der bzw. jeder Strumpf oder die bzw. jede Patrone des zu dem bzw. einem anderen Prozessraum (21, 23) gehörenden Filters (18, 218).

21. Verfahren nach einem der Ansprüche 1 bis 20, **dadurch gekennzeichnet, dass** die Wände (15, 215) der Behälter (11, 12, 13, 211) im Wesentlichen aus metallischen Materialien bestehen,
dass die gasdurchlässigen Böden (17) aus Sieb-Böden mit Löchern oder Schlitzen bestehen und
dass die Prozessräume (21, 22, 23, 221) direkt an die Mäntel der Wände (15, 215) und gasdurchlässigen Böden (17) angrenzen.

22. Verfahren nach einem der Ansprüche 1 bis 21, **dadurch gekennzeichnet, dass** die verwendete Wirbelschicht-Einrichtung (1) zwei oder drei Behälter (11, 12, 13, 211) aufweist und dass der allenfalls vorhandene dritte Behälter (13) einen Teilchen-Einlass (48) aufweist, der durch eine Transfer-Verbindung (54) mit dem Teilchen-Auslass (47) des zweiten Behälters (12) verbunden ist.

## Claims

1. A method for producing a particulate material (58) from an at least partially liquid material (35, 235) containing a solvent and/or dispersant,
- wherein, for executing the method, a fluidized bed device (1) having a plurality of fluidized bed containers (11, 12, 13, 211) is used, of which each has a wall (15, 215) and a process chamber (21, 22, 23, 221) that is delimited on the lower end by a gas-permeable base (17) and at the upper end, at least to a large extent, by a filter (18),
- wherein the fluidized bed containers (11, 12, 13, 211) comprise a first container (11, 211), having a first process chamber (21, 221), and a second container (12), having a second process chamber (2),
- wherein each container (11, 12, 13, 211) has a particle outlet (45, 47, 49) having a passage that opens into the process chamber (21, 22, 23, 221) immediately above the gas-permeable base (17),
- wherein the second container (12) has a particle inlet (46) having a passage opening into the second process chamber,
- wherein the particle outlet (45) of the first container (11, 211) is connected to the particle inlet (46) of the second container (12) via a transfer connection (53), and,
- wherein particles (131) are at least partly dried by freeze-drying in one of the process chambers (21, 22, 23, 211), **characterized in that**
- the first container (11, 211) of the device (1) used has a spray device having at least one spray nozzle (31, 231) with a downwardly directed outlet opening,
- **in that** the at least partially liquid material (35, 235) is atomized in the first process chamber (21, 221) to give droplets and these are frozen by contact with a freezing fluid to give particles (131),
- **in that** the particles (131) are then at least partly dried by freeze-drying in the first and/or second process chamber (21, 22, 221),
- **in that** during freeze-drying in this manner, process gas is passed upward from below through the at least one process chamber (21, 22, 221) for at least partly freeze-drying the particles (131) and through the filter (18, 218), and,
- **in that** at least a substantial part of the particles (131) rest against the filter (18, 218) at least during a substantial part of the freeze-drying.

2. The method according to claim 1, **characterized in that** particles (131) resting against the filter (18, 218) during the freeze-drying are detached from the filter (18) from time to time and then caused to rest against the filter (18, 218) again by means of the process gas and further dried on said filter.

3. The method according to claim 2, **characterized in that** the filter (18, 218) used for the freeze-drying has at least one filter element (18a, 218a) that is freed, at least every hour, at least from the majority of the particles (131) resting against it.

4. The method according to any of claims 1 through 3, **characterized in that** the filter (18, 218) used for the freeze-drying has at least two filter elements (18a, 218a) that, during the freeze-drying, are freed separately and alternately of the particles (131) resting against them.

5. The method according to claim 3 or 4, **characterized in that** the or rather each filter (18, 218) or any present filter elements (18a, 218a) of the or rather of each filter (18, 218) is vibrated and/or treated with ultrasound and/or blown out to detach the particles (131) adhering thereto.

6. The method according to any of claims 1 through 5, **characterized in that** a particle batch is formed by successive atomization of liquid and freezing of the droplets and **in that** at least most of the particles (131) rest against the filter (18, 218) for at least 30%, more usefully for at least 50%, and preferably for at least 70% of a freeze-drying period in which the particles (131) are dried, after production of the particle batch, by freeze-drying.

7. The method according to any of claims 1 through 6, **characterized in that** the process gas passed into the process chamber (21, 22, 221) containing the particles (131) for freeze-drying the latter has a higher temperature than the freezing fluid, the freezing fluid preferably having a temperature of at most -30°C and, for example, -80°C to -40°C, and the temperature of the process gas passed into the process chamber (21, 22, 221) containing the particles (131) for freeze-drying the latter usefully being at least 10°C higher, preferably at least 20°C higher, and, for example, at least -30°C higher than the temperature of the freezing fluid and being, for example, at least -30°C and, for example, at least 0°C.

8. The method according to any of claims 1 through 7, **characterized in that**, for forming the freezing fluid, process gas is cooled and passed into a freezing region for freezing the droplets and/or in that a coolant (236) that preferably has a liquefied gas, for example liquid nitrogen or dry, powdered dry ice or acetone and carbon dioxide dissolved therein, is sprayed into the freezing region, for example at least one jet of the at least partially liquid material (235) being produced and, for example, coolant (236) being atomized around a region of this jet.

9. The method according to any of claims 1 through 8, **characterized in that** the particles (131), after their production and/or drying in a process chamber (21, 22, 23, 221), are removed from the process chamber (21, 22, 23, 221) through the particle outlet (45, 47, 49), and,
**in that** the particles (131) removed from the first process chamber (21, 221) are transferred through a transfer connection (53) and the particle inlet (46) of the second container (12) into the second process chamber (22),
with blocking devices (51) present in the transfer connection (53) being temporarily opened for removing the particles (131) from the process chamber (21, 22, 23, 221) of the container (11, 12, 13, 211).

10. The method according to any of claims 1 through 9, **characterized in that**, during the atomization and freeze-drying of the at least partially liquid material (35, 235), process gas is passed into the first process chamber (21, 221) through the gas-permeable base (17) arranged at the bottom of the first process chamber (21, 221), and **in that** the particles (131) formed in the first process chamber (21, 221) by freezing are transferred with gas through the transfer connection (53) into the second process chamber (22), successive freezing of particles (131) in the first process chamber (21, 221) for example producing a particle batch that fluidizes particles (131) already present during the production of fresh particles (131) and, after the freezing of the entire particle batch, the particles (131) are transferred into the second process chamber (22), or, for example, the particles (131) formed by freezing being transferred continuously during the production of a particle batch from the first process chamber (21, 221) into the second process chamber (22), and the transfer connection (53) possibly being embodied as a fluidizing channel having a base that is gas-permeable, at least in parts, and gas possibly being passed through a gas-permeable base of the transfer connection (53) into the latter during the transfer of the particles (131) so that the particles (131) are, for example, fluidized in the transfer connection (53) and, for example, are already subjected to freeze-drying.

11. The method according to any of claims 1 through 10, **characterized in that**, after the freeze-drying, the particles (131) are heated to a temperature above 0°C and/or above the eutectic temperature of the particles,
**in that** the heating to above the temperature of 0°C and/or the eutectic temperature takes place in the same process chamber (21, 22, 221) as the freeze-drying, or,
**in that** after the freeze-drying the particles are transferred through the or rather a transfer connection (53, 54) into another process chamber (23) and are heated therein to above the temperature of 0°C and/or the eutectic temperature,
**in that** process gas for heating the particles (131) is passed upward from below through the process chamber (22, 23) containing the particles (131) to be heated, and the particles (131) are therein fluidized and possibly even dried, and
**in that**, after the heating, the particles (131) are removed from the specific container (12, 13) through the particle outlet (47, 49) thereof.

12. The method according to claim 11, **characterized in that** the particles are fluidized and dried in a last process chamber (23), and,
**in that** the process gas used during heating of the particles (131) for fluidizing the latter is passed through the last process chamber (23) upward from below and has a temperature that is greater than 0°C and is, for example, from at least 10°C to, for example, at most 30°C.

13. The method according to any of claims 1 through 12, **characterized in that** the walls (15, 215), the gas-permeable base (17), the filter (18, 218), and other parts that delimit process chambers (21, 22, 23, 221) and a passage (61) of the or of each transfer connection (53, 54) are made sterile, before and/or after the production of a quantity of the particulate material (58), in a state substantially sealed from the environment, by passing in a gaseous and/or a liquid sterilizing agent, for example steam, hot air or liquid alcohol, or hydrogen peroxide.

14. The method according to any of claims 1 through 12, **characterized in that** particles (131) are frozen and dried batchwise and **in that** at least occasionally at least two different process chambers (21, 22, 23, 221) are sealed from one another and simultaneously contain different batches of particles (131).

15. The method according to any of claims 1 through 14, **characterized in that** gas conveying means (65) are used that, together with the process chamber (22) for the freeze-drying, form a gas circuit (72), **in that** the process gas is circulated in the gas circuit (72) through the process chamber (22) in normal phases of operation, and **in that** the circulated process gas, after emerging from the process chamber (22) for the freeze-drying, is cooled and dried with a cooling and drying device (79) and then is heated in a heating device (80) having a heat exchanger before being passed into the process chamber (22), wherein, for example, waste heat that is generated by the cooling and drying device (79) belonging to this gas circuit (72) or, for example, by a cooling and drying unit (79) that belongs to another gas circuit (71) having another process chamber (21, 221) is passed to the heat exchanger and used therein for heating the process gas.

16. The method according to any of claims 1 through 15, **characterized in that** energy for heating the particles (131) is supplied to the particles (131) at least during a part of the freeze-drying by electromagnetic radiation and/or waves, for example infrared light and/or microwaves, and/or via the filter (18).

17. The method according to any of claims 1 through 16, **characterized in that** the pressure of the process gas in the process chamber (21, 22, 221) used for the freeze-drying is lower than the ambient air pressure during at least a part of the freeze-drying, and is possibly at most 900 hectopascal and, for example, from 50 hectopascal to 300 hectopascal.

18. The method according to any of claims 1 through 17, **characterized in that** the originally at least partially liquid material (35, 235) has at least one active substance and/or excipient for a drug and/or microorganisms and/or cells for the treatment of humans and/or animals and/or at least one substance for diagnostic purposes, the material being, for example, heat-sensitive.

19. The method according to any of claims 1 through 18, **characterized in that** the filter (18, 218) delimiting the process chamber (21, 22, 221) used for the freeze-drying at the top has a gas-permeable filter area that is greater than a cross-sectional area of a container interior region, containing the filter (18, 218), at the lower end of the filter (18, 218), this filter area usefully being at least 3 times, and preferably at least 5 times, greater than the aforesaid cross-sectional area, the filter (18, 218) preferably having at least one approximately vertical, gas-permeable cartridge or at least one approximately vertical, gas-permeable stocking having a length that is usefully at least 1 m, preferably at least 1.5 m, and, for example, at least 2 m, and the process chamber (21, 22, 221) used for the freeze-drying widening upward preferably at least in one region.

20. The method according to any of claims 1 through 19, **characterized in that** the process chamber (21, 22, 221) used for the freeze-drying is connected by at least one transfer connection (53, 54) to another process chamber (21, 23, 221) that has a filter (18, 218) at the top and that is for freeze-drying the droplets or for fluidizing and drying the particles (131), **in that** the filter (18, 218) of each process chamber (21, 22, 23, 221) has at least one gas-permeable stocking or at least one gas-permeable cartridge, and **in that** the or each stocking or the or each cartridge of the filter (18, 218) for the freeze-drying is longer than the or each stocking or the or each cartridge of the filter (18, 218) belonging to the or another process chamber (21, 23).

21. The method according to any of claims 1 through 20, **characterized in that** the walls (15, 215) of the containers (11, 12, 13, 211) essentially comprise metal materials,
**in that** the gas-permeable bases (17) comprise perforated bases having holes or slits, and
**in that** the process chambers (21, 22, 23, 221) are positioned directly against the surfaces of the walls (15, 215) and gas-permeable bases (17).

22. The method according to any of claims 1 through 21, **characterized in that** the fluidized bed device (1) used has two or three containers (11, 12, 13, 211) and **in that** the third container (13), present if needed, has a particle inlet (48) that is connected by a transfer connection (54) to the particle outlet (47) of the second container (12).

## Revendications

1. Procédé permettant de fabriquer un produit sous forme de particules (58) à partir d'au moins un matériau (35, 235) partiellement fluide, contenant un dispersant et/ou un solvant :
- un dispositif à lit fluidisé (1) équipé de plusieurs réservoirs à lit fluidisé (11, 12, 13, 211), dont chacun présente une paroi (15, 215) et contient une chambre de traitement (21, 22, 23, 221) qui est délimitée à l'extrémité inférieure par un plateau perforé (17) et à l'extrémité supérieure au moins en grande partie par un filtre (18), étant utilisé pour la mise en oeuvre du procédé ;
- le réservoir à lit fluidisé (11, 12, 13, 211) comprenant un premier réservoir (11, 211) avec une première chambre de traitement (21, 221) et un second réservoir (12) avec une deuxième chambre de traitement (2) ;
- chaque réservoir (11, 12, 13, 211) présentant une sortie pour les particules (45, 47, 49) avec un passage qui débouche juste au-dessus du plateau perforé perméable aux gaz (17) dans la chambre de traitement (21, 22, 23, 221) ;
- le deuxième réservoir (12) présentant une entrée pour les particules (46) avec un passage débouchant dans la deuxième chambre de traitement ;
- la sortie pour les particules (45) du premier réservoir (11, 211) étant relié par un raccord de transfert (53) à l'entrée pour les particules (46) du deuxième réservoir (12) ;
- les particules (131) étant séchées au moins partiellement par lyophilisation dans l'une des chambres de traitement (21, 22, 23, 211), **caractérisé en ce que** :
- le premier réservoir (11, 211) du dispositif utilisé (1) présente un dispositif de pulvérisation équipé d'au moins une buse de pulvérisation (31, 231) avec un orifice de sortie dirigé vers le bas ;
- le matériau (35, 235) au moins partiellement liquide est pulvérisé en gouttelettes à l'aide du dispositif de pulvérisation dans la première chambre de traitement (21, 221) et celles-ci sont congelées sous la forme de particules (131) en entrant en contact avec un fluide cryogénique ;
- les particules (131) sont ensuite séchées au moins partiellement par lyophilisation dans la première et/ou deuxième chambre de traitement (21, 22, 221) ;
- lors de la lyophilisation, ce type de gaz de procédé est conduit du bas vers le haut, à travers la chambre de traitement (21, 22, 221) servant au moins partiellement à la lyophilisation des particules (131) et à travers le filtre (18, 218) ;
- au moins une partie importante des particules (131) repose durant une grande partie de la lyophilisation contre le filtre (18, 218).

2. Procédé selon la revendication 1, **caractérisé en ce que** des particules (131) reposant contre le filtre (18, 218) se détachent de temps en temps du filtre (18) durant la lyophilisation, puis sont remises en contact contre le filtre (18, 218) par le gaz de procédé afin de continuer à y être séchées.

3. Procédé selon la revendication 2, **caractérisé en ce que** le filtre (18, 218) utilisé pour la lyophilisation présente au moins un élément filtrant (18a, 218a) qui est dégagé toutes les heures minimum d'au moins la plus grande partie des particules (131) qui reposent sur lui.

4. Procédé selon l'une des revendications 1 à 3, **caractérisé en ce que** le filtre (18, 218) utilisé pour la lyophilisation présente au moins deux éléments filtrants (18a, 218a) qui sont dégagés, de manière séparée et alternée, des particules (131) reposant contre eux au cours de la lyophilisation.

5. Procédé selon la revendication 3 ou 4, **caractérisé en ce que** le / chaque filtre (18, 218) ou, le cas échéant, les éléments filtrants existants (18a, 218a) du ou de chaque filtre (18, 218) sont soumis à des vibrations et/ou des ultrasons et/ou un souffle d'air afin de détacher les particules (131) qui y sont accrochées.

6. Procédé selon l'une des revendications 1 à 5, **caractérisé en ce qu'**une charge de particules est formée par des pulvérisations successives de liquide et la congélation des gouttelettes, et qu'au moins la plupart des particules (131) reposent contre le filtre (18, 218) au moins 30 %, de façon approprié au moins 50 % et de préférence au moins 70 % de la période de lyophilisation, pendant laquelle les particules (131) sont séchées par lyophilisation après que la charge de particules a été créée.

7. Procédé selon l'une des revendications 1 à 6, **caractérisé en ce que** le gaz de procédé, nécessaire à la lyophilisation des particules (131), conduit dans la chambre de traitement (21, 22, 221) contenant lesdites particules possède une température plus élevée que le fluide cryogénique, ledit fluide cryogénique ayant de préférence une température de -30 °C maximum qui se trouve, par exemple, entre -80 °C et -40 °C, et la température du gaz de procédé, nécessaire à la lyophilisation des particules (131), conduit dans la chambre de traitement (21, 22, 221) contenant lesdites particules étant de façon appropriée supérieure d'au moins 10 °C, de préférence supérieure d'au moins 20 °C et, par exemple, supérieure d'au moins 30 °C par rapport à la température du fluide cryogénique, et étant, par exemple, de -30 °C minimum ainsi que, par exemple, inférieure à 0 °C.

8. Procédé selon l'une des revendications 1 à 7, **caractérisé en ce que** le gaz de procédé permettant la formation du fluide cryogénique est refroidi et conduit dans une zone de congélation servant à congeler les gouttelettes et/ou
un agent réfrigérant (236), étant de préférence un gaz liquéfié, par exemple de l'azote liquide, ou de la glace carbonique ou de l'acétone sèche, pulvérisée et contenant du dioxyde de carbone, est pulvérisé dans la zone de congélation, un jet du matériau (235) au moins partiellement fluide étant généré, par exemple, et l'agent réfrigérant (236) étant pulvérisé autour de la zone dudit jet, par exemple.

9. Procédé selon l'une des revendications 1 à 8, **caractérisé en ce que** les particules (131) sont évacuées de la chambre de traitement (21, 22, 23, 221) après leur création et/ou séchage dans une chambre de traitement (21, 22, 23, 221) par la sortie pour les particules (45, 47, 49) et que les particules (131) évacuées de la première chambre de traitement (21, 221) sont transférées par le raccord de transfert (53) et l'entrée pour les particules (46) du deuxième réservoir (12) dans la deuxième chambre de traitement (22), les dispositifs de fermeture (51) présents au niveau du raccord de transfert (53) et qui permettent d'évacuer les particules (131) de la chambre de traitement (21, 22, 23, 221) du réservoir (11, 12, 13, 211) ayant été ouverts au préalable.

10. Procédé selon l'une des revendications 1 à 9, **caractérisé en ce que** du gaz de procédé est introduit dans la première chambre de traitement (21, 221) lors de la pulvérisation et de la congélation du matériau (35, 235) au moins partiellement fluide, à travers le plateau (17) perméable au gaz disposé au fond de la première chambre de traitement (21, 221), et que les particules (131) formées dans la première chambre de traitement (21, 221) par congélation sont transférées dans la deuxième chambre de traitement (22) par le raccord de transfert (53), une charge de particules qui fait tourbillonner les particules (131) déjà existantes durant la création de nouvelles particules (131) étant, par exemple, créée par la congélation successive de particules (131) dans la première chambre de traitement (21, 221), et les particules (131) étant transférées dans la deuxième chambre de traitement (22) après la congélation de la totalité de la charge de particules ou, par exemple, les particules (131) formées durant la congélation étant transférées en continu, pendant la création d'une charge de particules, de la première chambre de traitement (21, 221) dans la deuxième chambre de traitement (22), et le raccord de transfert (53) étant éventuellement formé comme une rainure trochoïdale avec au moins un plateau perméable au gaz par endroits et le gaz étant éventuellement conduit dans ledit raccord pendant le transfert des particules (131), à travers un plateau perméable au gaz du raccord de transfert (53), de sorte que les particules (131) soient, par exemple, amenées à tourbillonner dans le raccord de transfert (53) et, par exemple, déjà soumises à une lyophilisation.

11. Procédé selon l'une des revendications 1 à 10, **caractérisé en ce que** les particules (131) sont chauffées après la lyophilisation à une température supérieure à 0 °C et/ou supérieure à la température eutectique des particules, que le réchauffement au-dessus d'une température de 0 °C et/ou de la température eutectique se déroule encore dans la même chambre de traitement (21, 22, 221) que la lyophilisation ou que les particules sont transférées, après la lyophilisation, dans une autre chambre de traitement (23) par le / un raccord de transfert (53, 54) et y sont chauffées au-dessus de la température de 0 °C et/ou de la température eutectique, que, pour chauffer les particules (131), du gaz de procédé est conduit de bas en haut à travers la chambre de traitement (22, 23) contenant les particules à chauffer (131) et que les particules (131) tourbillonnent alors et sont encore éventuellement séchées et que les particules (131) sont évacuées de cette dernière par la sortie pour les particules (47, 49) du réservoir concerné (12, 13).

12. Procédé selon la revendication 11, **caractérisé en ce que** les particules tourbillonnent et sont séchées dans une dernière chambre de traitement (23), et que le gaz de procédé servant à faire tourbillonner les particules (131) lors de leur réchauffement est conduit de bas en haut à travers la dernière chambre de traitement (23) et possède une température supérieure à 0 °C et, par exemple, d'au moins 10 °C à un maximum de 30 °C, par exemple.

13. Procédé selon l'une des revendications 1 à 12, **caractérisé en ce que** les parois (15, 215), les plateaux perméables au gaz (17), les filtres (18, 218) et les autres pièces qui limitent les chambres de traitement (21, 22, 23, 221) et un passage (61) du ou de chaque raccord de transfert (53, 54) sont stérilisés avant et/ou après la fabrication d'une quantité de produits sous forme de particules (58) dans un état principalement hermétique à l'environnement, en introduisant un agent stérilisateur gazeux et/ou liquide, comme de la vapeur, de l'air chaud, de l'alcool liquide ou encore du peroxyde d'hydrogène.

14. Procédé selon l'une des revendications 1 à 12, **caractérisé en ce que** des particules (131) sont congelées et séchées par charges, et que deux différentes chambres de traitement (21, 22, 23, 221) minimum sont fermées l'une par rapport à l'autre, au moins par intermittence, et contiennent en même temps différentes charges de particules (131).

15. Procédé selon l'une des revendications 1 à 14, **caractérisé en ce que** des conducteurs de gaz (65) qui forment un circuit de gaz (72) avec la chambre de traitement (22) servant à la lyophilisation sont utilisés, et que le gaz de procédé est amené à circuler par phases d'exploitation normales dans le circuit de gaz (72), à travers la chambre de traitement (22) et que le gaz de procédé, brassé en aval de la sortie de la chambre de traitement (22) servant à la lyophilisation, est refroidi et séché à l'aide d'un dispositif de séchage et de refroidissement (79), puis encore chauffé dans un dispositif chauffant (80) consistant en un échangeur thermique, avant d'être introduit dans la chambre de traitement (22), les rejets thermiques qui sont générés par le dispositif de refroidissement et de séchage (79) appartenant audit circuit de gaz (72) ou, par exemple, par un dispositif de refroidissement et de séchage (79) qui appartient à un autre circuit de gaz (71) avec une autre chambre de traitement (21, 221), étant, par exemple, conduits à l'échangeur thermique et y étant utilisés pour chauffer le gaz de procédé.

16. Procédé selon l'une des revendications 1 à 15, **caractérisé en ce que** les particules (131) sont alimentées en énergie, au moins pendant une partie de la lyophilisation, par les rayons et/ou ondes électromagnétiques, tels que la lumière infrarouge et/ou les microondes, et/ou par le filtre (18) afin de réchauffer les particules (131).

17. Procédé selon l'une des revendications 1 à 16, **caractérisé en ce que** la pression du gaz de procédé dans la chambre de traitement (21, 22, 221) utilisée pour la lyophilisation est inférieure à la pression atmosphérique, durant au moins une partie de la lyophilisation, et est éventuellement de 900 hPa maximum et, par exemple, comprise entre 50 hPa et 300 hPa.

18. Procédé selon l'une des revendications 1 à 17 **caractérisé en ce que** le matériau à l'origine au moins partiellement fluide (35, 235) présente au moins une substance active et/ou un excipient pour un médicament et/ou des microorganismes et/ou des cellules destinées au traitement d'êtres humains et/ou d'animaux et/ou d'au moins une substance destinée à des fins diagnostiques, le matériau étant, par exemple, sensible à la chaleur.

19. Procédé selon l'une des revendications 1 à 18, **caractérisé en ce que** le filtre (18, 218) situé à la limite supérieure de la chambre de traitement utilisée pour la lyophilisation (21, 22, 221) possède une surface filtrante perméable au gaz qui est plus grande qu'une section transversale de l'intérieur d'un réservoir contenant le filtre (18, 218) au niveau de l'extrémité inférieure du filtre (18, 218), ladite surface filtrante étant de façon appropriée au moins 3 fois plus grande, et de façon préférentielle au moins 5 fois plus grande que la section transversale mentionnée, le filtre (18, 218) possédant de préférence au moins une cartouche perméable au gaz, à peu près verticale, ou au moins un manchon perméable au gaz, à peu près vertical, d'une longueur de 1 m minimum de façon appropriée, de 1,5 m de préférence et, par exemple, de 2 m minimum, et la chambre de traitement (21, 22, 221) utilisée pour la lyophilisation s'étendant de préférence vers le haut, au moins dans une zone.

20. Procédé selon l'une des revendications 1 à 19, **caractérisé en ce que** la chambre de traitement (21, 22, 221) utilisée pour la lyophilisation est reliée par au moins un raccord de transfert (53, 54) avec une autre chambre de traitement (21, 23, 221) dotée d'un filtre (18, 218) en haut pour congeler les gouttelettes ou faire tourbillonner et sécher les particules (131), et que le filtre (18, 218) de chaque chambre de traitement (21, 22, 23, 221) présente au moins un manchon perméable au gaz ou au moins une cartouche perméable au gaz et que le / chaque manchon ou la / chaque cartouche du filtre (18, 218) servant à la lyophilisation est plus long que le / chaque manchon ou la / chaque cartouche du filtre (18, 218) appartenant à la / une autre chambre de traitement (21, 23).

21. Procédé selon l'une des revendications 1 à 20, **caractérisé en ce que** les parois (15, 215) des réservoirs (11, 12, 13, 211) se composent essentiellement de matériaux métalliques, que les fonds (17) perméables au gaz sont constitués de plateaux perforés pourvus de trous ou de fentes et que les chambres de traitement (21, 22, 23, 221) jouxtent directement le revêtement des parois (15, 215) et le plateau (17) perméable au gaz.

22. Procédé selon l'une des revendications 1 à 21, **caractérisé en ce que** le dispositif à lit fluidisé (1) utilisé présente deux ou trois réservoirs (11, 12, 13, 211) et que le troisième réservoir (13) éventuellement présent dispose d'une entrée pour les particules (48) qui est reliée par un raccord de transfert (54) à la sortie pour les particules (47) du deuxième réservoir (12).
